# EUROPEAN PATENT APPLICATION

(11) **EP 1 840 724 A1**
(43) Date of publication of application: **03.10.2007**
(21) Application number: 05824489.8
(22) Date of filing: 27.12.2005
(51) Int. Cl.: G06F 3/12, B41J 29/38

(54) **DISTRIBUTED PRINTING SYSTEM AND DISTRIBUTED PRINTING CONTROL DEVICE**

(30) Priority: 05.01.2005 JP 2005000744; 12.01.2005 JP 2005004720
(71) Applicant: Seiko Epson Corporation, Shinjuku-ku, Tokyo 163-0811 (JP)
(72) Inventor: MATSUMOTO, Akira, SEIKO EPSON CORPORATION, Suwa-shi, Nagano 392-8502 (JP); SHIMA, Toshihiro, SEIKO EPSON CORPORATION, Suwa-shi, Nagano 392-8502 (JP); YOSHINO, Atsushi, SEIKO EPSON CORPORATION, Suwa-shi, Nagano 3928502 (JP)
(74) Representative: Cloughley, Peter Andrew
(86) International application number: PCT/JP2005/024256
(87) International publication number: WO 2006/073137

(57) **Abstract**

In a distributed printing system of the invention, in response to reception of a print job, a distributed printing control device specifies distribution destination printing devices for the received print job, stores identification information of the specified distribution destination printing devices, and distributes divisions of the received print job as divisional print jobs to the specified distribution destination printing devices. In response to an instruction given by a client, the distributed printing control device sends a transmission request for print job-related information on processing of the distributed divisional print jobs to the distribution destination printing devices and receives the print job-related information from the distribution destination printing devices. The distributed printing control device correlates the received print job-related information to the stored identification information of the distribution destination printing devices and sends the print job-related information correlated to the identification information to the client. The client receives the print job-related information correlated to the identification information from the distributed printing control device and displays information identifying each of the plural distribution destination printing devices and information representing a progress status of each of the divisional print jobs distributed to the plural distribution destination printing devices, based on the received print job-related information and the correlated identification information. This arrangement of the invention enables the client to readily identify the distribution destination printing devices specified by the distributed printing control device and to display the progress status of each of the divisional print jobs distributed to the respective identified distribution destination printing devices.

## Description

### Technical Field

The present invention relates to a distributed printing system that distributes a print job to multiple printing devices connected to a network. More specifically the invention pertains to a technique of readily identifying respective printing devices as individual distribution destinations and displaying the progress status of each divisions of a print job distributed to the distribution destination printing devices or sending a control command to the distribution destination printing devices.

### Background Art

In common printing systems, the user selectively uses multiple printing devices connected to one single network. One proposed technique for such printing systems is distributed printing that distributes a print job to plural printing devices to enable parallel processing of the respective divisions of the print job in the plural printing devices and accordingly completes the print job in a short time period (see, for example, Japanese Patent Laid-Open Gazette No. 2002-215369).

A proposed distributed printing system adopting the distributed printing technique includes multiple printers, a client for generating a print job, and a distributed printing control device that are interconnected via a network. The distributed printing control device receives the print job from the client, specifies printers satisfying predetermined conditions, such as an online condition, as distribution destination printers selected among the multiple printers, and distributes divisions of the received print job as divisional print jobs to the specified distribution destination printers.

In this prior art distributed printing system, the distributed printing control device specifies the distribution destination printers after reception of a print job. The user is thus not informed of the specification of the distribution destination printers among the multiple printers with regard to the print job.

When the user wants to check the progress status of each of the divisional print jobs distributed to the respective distribution destination printers, the user is required to open individual display windows provided by printer drivers of the multiple printers connected to the network on a display of the client. The user then refers to these display windows to check whether the print job has been distributed to each of the multiple printers. This is rather troublesome for the user.

When the user wants to cancel the distributed print job, the user is required to open the individual display windows for the multiple printers on the display of the client and identify whether the print job as the cancellation target has been distributed to each of the printers. Such identification of the distribution destination printers for the print job is rather time-consuming and labor-consuming.

After the identification of the distribution destination printers, a cancellation command for cancellation of the print job is sent to each of the identified distribution destination printers to cancel the distributed print job. The time-consuming and labor-consuming identification of the distribution destination printers is required not only in the case of transmission of the cancellation command but in the case of transmission of another control command for controlling each of the identified distribution destination printers to execute a predetermined process.

### Disclosure of the Invention

By taking into account the problems of the prior art, there is a need of providing a technique that readily identifies distribution destination printing devices specified by a distributed printing control device and displays the progress status of each of divisional print jobs distributed to the respective identified distribution destination printing devices.

There is also a need of providing a technique that readily identifies distribution destination printing devices specified by a distributed printing control device and sends a control command to the identified distribution destination printing devices.

In order to satisfy at least part of the above and the other related demands, the present invention is directed to a first distributed printing system including a client, multiple printing devices, and a distributed printing control device that are interconnected via a network. The distributed printing control device has a function of distributing a print job received via the network into plural distribution destination printing devices selected as distribution destinations among the multiple printing devices. The distributed printing control device specifies the plural distribution destination printing devices for the received print job, stores identification information of the specified plural distribution destination printing devices, and distributes divisions of the received print job as divisional print jobs to the specified distribution destination printing devices. In response to an instruction given by the client, the distributed printing control device sends a transmission request for print job-related information on processing of the distributed divisional print jobs to the plural distribution destination printing devices identified by the stored identification information, and receives the print job-related information sent back as responses to the transmission request from the identified plural distribution destination printing devices. The distributed printing control device correlates the received print job-related information to the identification information of the plural distribution destination printing devices as senders of the print job-related information and sends back the print job-related information correlated to the identification information to the client as a response to the instruction. The client receives the print job-related information correlated to the identification information from the distributed printing control device and displays information identifying each of the plural distribution destination printing devices and information representing a progress status of each of the divisional print jobs distributed to the plural distribution destination printing devices, based on the received print job-related information and the correlated identification information.

In the first distributed printing system of the invention, the distributed printing control device stores the identification information of the specified distribution destination printing devices. In response to an instruction given by the client, the distributed printing control device refers to the stored identification information and sends the transmission request for the print job-related information to the distribution destination printing devices identified by the identification information. The distributed printing control device correlates the print job-related information received from the distribution destination printing devices to the identification information of the respective distribution destination devices as the senders of the print job-related information and sends the print job-related information correlated to the identification information to the client. This arrangement enables the client to readily obtain the print job-related information from the respective distribution destination printing devices even when the client is not informed of specification of the distribution destination printing devices with regard to the print job.

In the first distributed printing system of the invention, the client displays the information identifying each of the distribution destination printing devices and the information representing the progress status of each of the divisional print jobs distributed to the respective distribution destination printing devices, based on the received print job-related information and the correlated identification information. Such display allows the user to readily identify the distribution destination printing devices and check the progress statuses of the divisional print jobs distributed to the respective distribution destination printing devices, even when the user is not informed of specification of the distribution destination printing devices with regard to the print job.

In the first distributed printing system of the invention, it is preferable that the print job-related information includes at least one of status information representing a working status of each of the plural distribution destination printing devices, required copy number information included in each divisional print job distributed to each of the plural distribution destination printing devices, and complete copy number information representing a number of print copies completed by each of the plural distribution destination printing devices as a processing result of the divisional print job distributed to the distribution destination printing device.

When the print job-related information includes the information representing the working statuses of the respective distribution destination printing devices, the client in the first distributed printing system can display the working status, such as 'in printing' or 'paper jam', of each of the distribution destination printing devices as the information representing the progress status of each of the divisional print jobs distributed to the respective distribution destination printing devices. When the print job-related information includes the required copy number information included in each divisional print job distributed to each of the distribution destination printing devices, the client can display the required number of copies to be printed by each of the distribution destination printing devices as the information representing the progress status of each of the divisional print jobs distributed to the respective distribution destination printing devices. When the print job-related information includes the complete copy number information representing the number of print copies completed by each of the plural distribution destination printing devices, the client can display the number of copies actually printed by each of the distribution destination printing devices as the information representing the progress status of each of the divisional print jobs distributed to the respective distribution destination printing devices.

The present invention is also directed to a first client corresponding to the first distributed printing system. The first client is connected with a distributed printing control device via a network. The distributed printing control device has functions of specifying plural distribution destination printing devices as distribution destinations for a print job, distributing divisional print jobs as divisions of the print job to the specified plural distribution destination printing devices, and acquiring print job-related information on processing of the divisional print jobs from the respective distribution destination printing devices. The first client has a receiver module, a control module, and a display module. The receiver module receives the print job-related information, which is correlated to identification information of the plural distribution destination printing devices, from the distributed printing control device. The control module controls the display module to display information identifying each of the plural distribution destination printing devices and information representing a progress status of each of the divisional print jobs distributed to the plural distribution destination printing devices, based on the print job-related information and the correlated identification information received by the receiver module.

In the first client of the invention, the control module controls the display module to display the information identifying each of the distribution destination printing devices and the information representing the progress status of each of the divisional print jobs distributed to the respective distribution destination printing devices, based on the print job-related information and the correlated identification information received by the receiver module. Such display on the display module allows the user to readily identify the distribution destination printing devices and check the progress statuses of the divisional print jobs distributed to the respective distribution destination printing devices, even when the user is not informed of specification of the distribution destination printing devices with regard to the print job.

In the first client of the invention, it is preferable that the print job-related information includes at least one of status information representing a working status of each of the plural distribution destination printing devices, required copy number information included in each divisional print job distributed to each of the plural distribution destination printing devices, and complete copy number information representing a number of print copies completed by each of the plural distribution destination printing devices as a processing result of the divisional print job distributed to the distribution destination printing device.

When the print job-related information includes the information representing the working statuses of the respective distribution destination printing devices, the display module of the first client can display the working status, such as 'in printing' or 'paper jam', of each of the distribution destination printing devices as the information representing the progress status of each of the divisional print jobs distributed to the respective distribution destination printing devices. When the print job-related information includes the required copy number information included in each divisional print job distributed to each of the distribution destination printing devices, the display module of the first client can display the required number of copies to be printed by each of the distribution destination printing devices as the information representing the progress status of each of the divisional print jobs distributed to the respective distribution destination printing devices. When the print job-related information includes the complete copy number information representing the number of print copies completed by each of the plural distribution destination printing devices, the display module of the first client can display the number of copies actually printed by each of the distribution destination printing devices as the information representing the progress status of each of the divisional print jobs distributed to the respective distribution destination printing devices.

In one aspect of the first client of the invention, the print job-related information includes at least either of required copy number information included in each divisional print job distributed to each of the plural distribution destination printing devices, and complete copy number information representing a number of print copies completed by each of the plural distribution destination printing devices as a processing result of the divisional print job distributed to the distribution destination printing device. The control module controls the display module to display total required copy number information representing a sum of required numbers of copies defined by the required copy number information and total complete copy number information representing a sum of the numbers of completed print copies, based on the print job-related information as well as the information identifying each of the plural distribution destination printing devices and the information representing the progress status of each of the divisional print jobs.

In the first client of this arrangement, the receiver module receives the required copy number information included in each divisional print job distributed to each of the distribution destination printing devices and the complete copy number information representing the number of print copies completed by each of the plural distribution destination printing devices. The control module controls the display module to display the total required copy number information representing the sum of required numbers of copies defined by the required copy number information and the total complete copy number information representing the sum of the numbers of completed print copies, based on the information received by the receiver module.

The total required copy number information represents the total number of copies to be printed with regard to the original print job prior to the distribution. The total complete copy number information represents the total number of actually printed copies with regard to the original print job prior to the distribution. Such display on the display module enables the user to readily check the overall progress status of the original print job prior to the distribution.

The present invention is further directed to a distributed printing control device corresponding to the first distributed printing system. This distributed printing control device has a function of distributing a print job received via a network into plural distribution destination printing devices selected as distribution destinations among multiple printing devices connected to the network. The distributed printing control device includes: a specification module that specifies the plural distribution destination printing devices for the received print job; a storage module that stores identification information of the plural distribution destination printing devices specified by the specification module; a distribution module that reads the identification information from the storage module and distributes divisions of the received print job as divisional print jobs to the plural distribution destination printing devices identified by the read identification information; a request module that sends a transmission request for print job-related information on processing of the distributed divisional print jobs to the plural distribution destination printing devices; and a control module. In response to an externally given instruction, the request module reads the identification information from the storage module and sends the transmission request for the print job-related information to the plural distribution destination printing devices identified by the read identification information. The control module receives the print-job related information from the plural distribution destination printing devices, correlates the received print job-related information to the identification information of the plural distribution destination printing devices as senders of the print job-related information, and sends back the print job-related information correlated to the identification information to a sender of the externally given instruction.

In the distributed printing control device of the invention, the storage module stores the identification information of the specified distribution destination printing devices. In response to an externally given instruction for sending the print-job required information, the request module reads the identification information from the storage module and sends the transmission request for the print job-related information to the distribution destination printing devices identified by the read identification information.

In the distributed printing control device of the invention, the control module correlates the print job-related information received from the distribution destination printing devices to the identification information of the respective distribution destination printing devices as the senders of the print job-related information and sends the print job-related information correlated to the identification information to the sender of the externally given instruction. This arrangement enables the sender of the externally given instruction to readily obtain the print job-related information from the respective distribution destination printing devices even when the sender is not informed of specification of the distribution destination printing devices with regard to the print job.

The present invention is also directed to a second distributed printing system including a client, multiple printing devices, and a distributed printing control device that are interconnected via a network. The distributed printing control device has a function of distributing a print job received via the network into plural distribution destination printing devices selected as distribution destinations among the multiple printing devices. The distributed printing control device specifies the plural distribution destination printing devices for the received print job, stores identification information of the specified plural distribution destination printing devices, and distributes divisions of the received print job as divisional print jobs to the specified distribution destination printing devices. In response to a transmission request for the identification information from the client, the distributed printing control device sends back the stored identification information to the client. The client receives the identification information from the distributed printing control device and sends a transmission request for print job-related information on processing of the distributed divisional print jobs to the distribution destination printing devices identified by the received identification information. The client receives the print job-related information from the distribution destination printing devices and displays information identifying each of the plural distribution destination printing devices and information representing a progress status of each of the divisional print jobs distributed to the plural distribution destination printing devices, based on the received print job-related information.

In the second distributed printing system of the invention, the distributed printing control device stores the identification information of the specified distribution destination printing devices. In response to the transmission request for the identification information from the client, the distributed printing control device sends the stored identification information to the client. The identification information received from the distributed printing control device enables the client to identify the respective distribution destination printing devices and to request the identified distribution destination printing devices to send the print job-related information, even when the client is not informed of specification of the distribution destination printing devices with regard to the print job.

In the second distributed printing system of the invention, the client displays the information identifying each of the distribution destination printing devices and the information representing the progress status of each of the divisional print jobs distributed to the respective distribution destination printing devices, based on the print job-related information received from the respective distribution destination printing devices. Such display allows the user to readily identify the distribution destination printing devices and check the progress statuses of the divisional print jobs distributed to the respective distribution destination printing devices, even when the user is not informed of specification of the distribution destination printing devices with regard to the print job.

In the second distributed printing system of the invention, it is preferable that the print job-related information includes at least one of status information representing a working status of each of the plural distribution destination printing devices, required copy number information included in each divisional print job distributed to each of the plural distribution destination printing devices, and complete copy number information representing a number of print copies completed by each of the plural distribution destination printing devices as a processing result of the divisional print job distributed to the distribution destination printing device.

When the print job-related information includes the information representing the working statuses of the respective distribution destination printing devices, the client in the second distributed printing system can display the working status, such as 'in printing' or 'paper jam', of each of the distribution destination printing devices as the information representing the progress status of each of the divisional print jobs distributed to the respective distribution destination printing devices. When the print job-related information includes the required copy number information included in each divisional print job distributed to each of the distribution destination printing devices, the client can display the required number of copies to be printed by each of the distribution destination printing devices as the information representing the progress status of each of the divisional print jobs distributed to the respective distribution destination printing devices. When the print job-related information includes the complete copy number information representing the number of print copies completed by each of the plural distribution destination printing devices, the client can display the number of copies actually printed by each of the distribution destination printing devices as the information representing the progress status of each of the divisional print jobs distributed to the respective distribution destination printing devices.

The present invention is also directed to a second client corresponding to the second distributed printing system. The second client is connected with a distributed printing control device via a network. The distributed printing control device has functions of specifying plural distribution destination printing devices as distribution destinations for a print job, storing identification information of the specified distribution destination printing devices, and distributing divisional print jobs as divisions of the print job to the specified plural distribution destination printing devices. The second client includes: a control module; a display module; a first request module that sends a transmission request for the identification information to the distributed printing control device; a second request module that, upon reception of the identification information from the distributed printing control device as a response to the transmission request sent by the first request module, sends a transmission request for print job-related information on processing of the distributed divisional print jobs to the distribution destination printing devices identified by the received identification information; and a receiver module that receives the print job-related information from the distribution destination printing devices as responses to the transmission request sent by the second request module. The control module controls the display module to display information identifying each of the plural distribution destination printing devices and information representing a progress status of each of the divisional print jobs distributed to the plural distribution destination printing devices, based on the print job-related information received by the receiver module.

In the second client of the invention, the first request module sends the transmission request for the identification information of the specified distribution destination printing devices to the distributed printing control device. In response to reception of the stored identification information from the distributed printing control device, the second request module identifies the distribution destination printing devices based on the received identification information and sends the transmission request for the print job-related information to the identified distribution destination printing devices.

In the second client of the invention, the control module controls the display module to display the information identifying each of the distribution destination printing devices and the information representing the progress status of each of the divisional print jobs distributed to the respective distribution destination printing devices, based on the print job-related information received from the respective distribution destination printing devices. Such display on the display module allows the user to readily identify the distribution destination printing devices and check the progress statuses of the divisional print jobs distributed to the respective distribution destination printing devices, even when the user is not informed of specification of the distribution destination printing devices with regard to the print job.

In the second client of the invention, it is preferable that the print job-related information includes at least one of status information representing a working status of each of the plural distribution destination printing devices, required copy number information included in each divisional print job distributed to each of the plural distribution destination printing devices, and complete copy number information representing a number of print copies completed by each of the plural distribution destination printing devices as a processing result of the divisional print job distributed to the distribution destination printing device.

When the print job-related information includes the information representing the working statuses of the respective distribution destination printing devices, the display module of the second client can display the working status, such as 'in printing' or 'paper jam', of each of the distribution destination printing devices as the information representing the progress status of each of the divisional print jobs distributed to the respective distribution destination printing devices. When the print job-related information includes the required copy number information included in each divisional print job distributed to each of the distribution destination printing devices, the display module of the second client can display the required number of copies to be printed by each of the distribution destination printing devices as the information representing the progress status of each of the divisional print jobs distributed to the respective distribution destination printing devices. When the print job-related information includes the complete copy number information representing the number of print copies completed by each of the plural distribution destination printing devices, the display module of the second client can display the number of copies actually printed by each of the distribution destination printing devices as the information representing the progress status of each of the divisional print jobs distributed to the respective distribution destination printing devices.

In one aspect of the second client of the invention, the print job-related information includes at least either of required copy number information included in each divisional print job distributed to each of the plural distribution destination printing devices, and complete copy number information representing a number of print copies completed by each of the plural distribution destination printing devices as a processing result of the divisional print job distributed to the distribution destination printing device. The control module controls the display module to display total required copy number information representing a sum of required numbers of copies defined by the required copy number information and total complete copy number information representing a sum of the numbers of completed print copies, based on the print job-related information as well as the information identifying each of the plural distribution destination printing devices and the information representing the progress status of each of the divisional print jobs.

In the second client of this arrangement, the receiver module receives the required copy number information included in each divisional print job distributed to each of the distribution destination printing devices and the complete copy number information representing the number of print copies completed by each of the plural distribution destination printing devices. The control module controls the display module to display the total required copy number information representing the sum of required numbers of copies defined by the required copy number information and the total complete copy number information representing the sum of the numbers of completed print copies, based on the information received by the receiver module.

The total required copy number information represents the total number of copies to be printed with regard to the original print job prior to the distribution. The total complete copy number information represents the total number of actually printed copies with regard to the original print job prior to the distribution. Such display on the display module enables the user to readily check the overall progress status of the original print job prior to the distribution.

The present invention is further directed to a third client corresponding to the second distributed printing system. The third client is equipped with a user interface that is activated in the case of distribution of a certain print job as divisional print jobs to plural printing devices connected to a network to check a progress status of each of the divisional print jobs distributed to the plural printing devices. The user interface generates and opens a display window, which includes a list of identification information identifying each of the plural printing devices and progress status information representing the progress status of each of the divisional print jobs distributed to the plural printing devices.

The third client of the invention displays the list of identification information identifying each of the printing devices. This list of identification information enables the user to readily identify the printing devices as distribution destinations of the certain print job. The progress status information representing the progress status of each of the divisional print jobs distributed to the printing devices is displayed simultaneously with the list of identification information in the display window. This arrangement enables the user to readily check the progress status of each of the divisional print jobs distributed to the respective printing devices.

In the third client of the invention, it is preferable that the display window generated and opened by the user interface includes total required copy number information representing a sum of required numbers of print copies included in the respective distributed divisional print jobs and total complete copy number information representing a sum of numbers of completed print copies as processing results of the distributed divisional print jobs, in addition to the list of identification information representing each of the plural printing devices and the progress status information representing the progress status of each of the divisional print jobs.

The total required copy number information represents the total number of copies to be printed with regard to the original print job prior to the distribution. The total complete copy number information represents the total number of actually printed copies with regard to the original print job prior to the distribution. The display window generated and opened by the third client enables the user to readily check the overall progress status of the original print job prior to the distribution.

In the third client of the invention, it is preferable that the progress status information includes at least one of working status information representing a working status of each of the plural printing devices, required copy number information included in each divisional print job distributed to each of the plural printing devices, and complete copy number information representing a number of print copies completed by each of the plural printing devices as a processing result of the divisional print job distributed to the printing device.

When the progress status information includes the working status information representing the working statuses of the respective printing devices, the third client can display the working status, such as 'in printing' or 'paper jam', of each of the printing devices. When the progress status information includes the required copy number information included in each divisional print job distributed to each of the printing devices, the third client can display the required number of copies to be printed by each of the printing devices. When the progress status information includes the complete copy number information representing the number of print copies completed by each of the printing devices, the third client can display the number of copies actually printed by each of the printing devices.

The present invention is also directed to a first distributed printing control device corresponding to the second distributed printing system. The first distributed printing control device has a function of distributing a print job received via a network into plural distribution destination printing devices selected as distribution destinations among multiple printing devices connected to the network. The first distributed printing control device includes: a memory module that stores the received print job; a specification module that specifies the plural distribution destination printing devices for the received print job; a storage module that stores identification information of the plural distribution destination printing devices specified by the specification module; a distribution module that reads the identification information from the storage module and distributes divisions of the print job stored in the memory module as divisional print jobs to the plural distribution destination printing devices identified by the read identification information; and a command transmission module that sends a control command for execution of a predetermined process to the distribution destination printing devices. In response to an externally given instruction for sending the control command to the distribution destination printing devices, the command transmission module reads the identification information from the storage module and sends the control command to at least one of the distribution destination printing devices identified by the read identification information.

The first distributed printing control device of the invention stores the identification information of the specified distribution destination printing devices into its storage module. In response to an externally given instruction for sending the control command, the first distributed printing control device reads the identification information from the storage module, identifies the distribution destination printing devices based on the identification information, and sends the control command to at least one of the identified distribution destination printing devices. Even when the sender of the externally given instruction is not informed of the specification of the distribution destination printing devices among the printing devices connected to the network, the control command can be sent to the distribution destination printing devices by simply requesting the first distributed printing control device to send the control command.

The present invention is further directed to a second distributed printing control device corresponding to the second distributed printing system. The second distributed printing control device has a function of distributing a print job received via a network into plural distribution destination printing devices selected as distribution destinations among multiple printing devices connected to the network. The second distributed printing control device includes: a memory module that stores the received print job; a specification module that specifies the plural distribution destination printing devices for the received print job; a storage module that stores identification information of the plural distribution destination printing devices specified by the specification module ; a distribution module that reads the identification information from the storage module and distributes divisions of the print job stored in the memory module as divisional print jobs to the plural distribution destination printing devices identified by the read identification information; and a command transmission module that sends a cancellation command to the distribution destination printing devices to cancel the divisional print jobs distributed to the distribution destination printing devices. In response to an externally given instruction for sending the cancellation command to the distribution destination printing devices, the command transmission module reads the identification information from the storage module and sends the cancellation command to at least one of the distribution destination printing devices identified by the read identification information.

The second distributed printing control device of the invention stores the identification information of the specified distribution destination printing devices into its storage module. In response to an externally given instruction for sending the cancellation command, the second distributed printing control device reads the identification information from the storage module, identifies the distribution destination printing devices based on the identification information, and sends the cancellation command to at least one of the identified distribution destination printing devices. Even when the sender of the externally given instruction is not informed of the specification of the distribution destination printing devices among the printing devices connected to the network, the cancellation command can be sent to the distribution destination printing devices to cancel the distributed divisional print jobs by simply requesting the second distributed printing control device to send the cancellation command.

In one aspect of the invention, the second distributed printing control device further has a control module that cancels the print job stored in the memory module. When the instruction for sending the cancellation command to the distribution destination printing devices is externally given in the course of distribution of the print job as the divisional print jobs to the distribution destination printing devices by the distribution module and reception of the distributed divisional print jobs by the respective distribution destination printing devices, the control module cancels the print job stored in the memory module. In response to cancellation of the print job by the control module, the command transmission module reads the identification information from the storage module and sends the cancellation command to the distribution destination printing devices identified by the read identification information.

When the cancellation command is sent from the distributed printing control device to each of the distribution destination printing devices in the course of distribution of a print job from the distributed printing control device to the distribution destination printing device, the distribution destination printing device cancels the distributed part of the print job. After cancellation, the residual part of the print job is distributed from the distributed printing control device to the distribution destination printing device. The residual part of the print job is thus not cancelled but remains in the distribution destination printing device.

The second distributed printing control device of this arrangement, however, cancels first the print job stored in the memory module. This cancels the residual part of the print job that has not yet been distributed to the distribution destination printing devices. Namely the residual part of the print job is not distributed after cancellation of the distributed part of the print job in the distribution destination printing device. This arrangement effectively prevents any part of the print job from being not cancelled but unexpectedly remaining.

In another aspect of the invention, the second distributed printing control device further has a transmission request module that sends a transmission request for progress status information regarding a progress status of each of the divisional print jobs distributed to the distribution destination printing devices. In response to the externally given instruction for sending the cancellation command, the transmission request module reads the identification information from the storage module and sends the transmission request for the progress status information to the distribution destination printing devices identified by the read identification information. The command transmission module sends the cancellation command to only a distribution destination printing device that has not yet completed the distributed divisional print job among the identified distribution destination printing devices, based on the progress status information received from the distribution destination printing devices as responses to the transmission request sent by the transmission request module.

The second distributed printing control device of this arrangement does not uselessly send the cancellation command to the distribution destination printing device that has already completed the distributed divisional print job. This arrangement desirably prevents the unnecessary data flow on the network.

The present invention is also directed to a third distributed printing system including a client, multiple printing devices, and a distributed printing control device that are interconnected via a network. The distributed printing control device has a function of distributing a print job received via the network into plural distribution destination printing devices selected as distribution destinations among the multiple printing devices. The distributed printing control device specifies the plural distribution destination printing devices for the received print job, stores identification information of the specified plural distribution destination printing devices, and distributes divisions of the received print job as divisional print jobs to the specified distribution destination printing devices. In response to a transmission request for the identification information from the client, the distributed printing control device sends the stored identification information to the client. The client receives the identification information from the distributed printing control device and sends a cancellation command to at least one of the distribution destination printing devices identified by the received identification information to cancel a divisional print job distributed to the distribution destination printing device.

In the third distributed printing system of the invention, the distributed printing control device stores the identification information of the specified distribution destination printing devices. In response to the transmission request for the identification information from the client, the distributed printing control device sends the stored identification information to the client. The identification information received from the distributed printing control device enables the client to identify the respective distribution destination printing devices. The client sends the cancellation command to at least one of the identified distribution destination printing devices. Even when the client is not informed of specification of the distribution destination printing devices among the multiple printing devices connected to the network, the client can identify the distribution destination printing devices and send the cancellation command to the identified distribution destination printing devices to cancel out the divisional print jobs distributed to the distribution destination printing devices.

The present invention is further directed to a fourth client corresponding to the third distributed printing system. The fourth client is connected with a distributed printing control device via a network. The distributed printing control device has functions of storing a print job in a memory module, specifying plural distribution destination printing devices as distribution destinations for the print job and distributing divisional print jobs as divisions of the print job to the specified plural distribution destination printing devices. The fourth client includes: an input module that inputs an instruction for cancellation of the print job; an identification information transmission request module that; in response to input of the instruction for cancellation of the print job via the input module, sends a transmission request for identification information of the specified distribution destination printing devices to the distributed printing control device; a user interface module that receives the identification information from the distributed printing control device as a response to the transmission request by the identification information transmission request module and provides a user interface based on the received identification information, where the user interface is activated to select at least one distribution destination printing device as a cancellation target of the divisional print job distributed to the at least one distribution destination printing device; and a command transmission module that sends a first cancellation command to the at least one distribution destination printing device selected by means of the user interface to cancel the divisional print job distributed to the at least one distribution destination printing device.

The fourth client of the invention provides the user interface based on the identification information of the specified distribution destination printing devices. The user interface is used to select at least one distribution destination printing device as the cancellation target of the distributed print job. Even when the user is not informed of specification of the distribution destination printing devices among the multiple printing devices connected to the network, the user interface enables the user to readily identify the distribution destination printing devices. The fourth client of the invention sends the first cancellation command to at least one distribution destination printing device selected via the user interface to cancel the distributed print job. This arrangement enables the user to select distribution destination printing devices and cancel the divisional print jobs distributed to the selected distribution destination printing devices.

In one aspect of the fourth client of the invention, upon selection of the at least one distribution destination printing device by means of the user interface, the command transmission module first sends a second cancellation command to the distributed printing control device to cancel the print job stored in the memory module and subsequently sends the first cancellation command to the at least one distribution destination printing device.

When the client sends the cancellation command in the course of distribution of a print job from the distributed printing control device to the distribution destination printing device, the distribution destination printing device cancels the distributed part of the print job. After cancellation, the residual part of the print job is distributed from the distributed printing control device to the distribution destination printing device. The residual part of the print job is thus not cancelled but remains in the distribution destination printing device.

The fourth client of this arrangement, however, first sends the second cancellation command to the distributed printing control device to cancel the print job stored in the memory module. This cancels the residual part of the print job that has not yet been distributed to the distribution destination printing devices. Namely the residual part of the print job is not distributed after cancellation of the distributed part of the print job in the distribution destination printing device. This arrangement effectively prevents any part of the print job from being not cancelled but unexpectedly remaining.

In another aspect of the invention, the fourth client further has a status transmission request module that sends a transmission request for progress status information regarding a progress status of the distributed divisional print job to the at least one distribution destination printing device selected by means of the user interface. The command transmission module sends the first cancellation command to only a distribution destination printing device that has not yet completed the distributed divisional print job among the at least one distribution destination printing device, based on the progress status information received from the at least one distribution destination printing devices as responses to the transmission request sent by the status transmission request module.

The fourth client of this arrangement does not uselessly send the first cancellation command to the distribution destination printing device that has already completed the distributed divisional print job. This arrangement desirably prevents the unnecessary data flow on the network.

The present invention is also directed to a fifth client corresponding to the third distributed printing system. The fifth client is equipped with a user interface that is activated in the case of distribution of a certain print job as divisional print jobs to plural printing devices connected to a network to specify at least one printing device and cancel the divisional print job distributed to the specified printing device. The user interface generates and opens a display window, which includes a list of identification information identifying each of the plural printing devices and plural first instruction elements provided individually corresponding to the plural printing devices to give instructions for cancellation of the divisional print jobs distributed to the corresponding printing devices.

The fifth client of the invention displays the list of identification information identifying each of the printing devices as the distribution destinations of the print job. The user can thus readily identify the printing devices that have received the distributed divisions of the print job. The first instruction elements provided individually corresponding to the respective printing devices for cancellation of the distributed divisional print jobs are displayed simultaneously with the list of identification information in the display window. This arrangement enables the user to readily select printing devices as the cancellation targets of the distributed print job and give the cancellation instruction to the selected printing devices for cancellation of the distributed print job.

In one aspect of the fifth client of the invention, the display window generated and opened by the user interface includes a second instruction element to give an instruction for overall cancellation of all the divisional print jobs distributed to the plural printing devices, in addition to the list of identification information representing each of the printing devices and the plural first instruction elements.

The fifth client of this arrangement enables the user to collectively cancel the distributed print job in all the printing devices.

The present invention is also directed to a third distributed printing control device corresponding to the third distributed printing system. The third distributed printing control device has functions of specifying plural distribution destination printing devices selected as divisional destinations of a print job received via a network among multiple printing devices connected to the network and distributing divisional print jobs as divisions of the print job to the specified plural distribution destination printing devices. The third distributed printing control device includes: a storage module that stores identification information of the specified plural distribution destination printing devices; and a transmission module that sends the identification information to a client connected to the network. In response to a request for transmission of the identification information from the client to the distributed printing control device, the transmission module reads the identification information from the storage module and sends the read identification information to the client.

The third distributed printing control device of the invention stores the identification information of the specified distribution destination printing devices. In response to the transmission request for the identification information from the client, the third distributed printing control device sends the stored identification information to the client. The identification information received from the third distributed printing control device enables the client to identify the respective distribution destination printing devices.

The client may then refer to this received identification information and send a cancellation command for cancellation of the distributed print job or another control command to the identified distribution destination printing devices.

The technique of the invention is not restricted to the distributed printing systems, the clients, or the distributed printing control devices described above, but may also be actualized by printing devices including the distributed printing control devices. The present invention is not limited to these device configurations but is attained by diversity of other applications. The possible applications of the invention include print job progress status display methods, control command transmission methods, and print job cancellation methods corresponding to these device configurations described above, as well as computer programs that are executed to actualize these device configurations and the corresponding methods, recording media that record such computer programs therein, and data signals that include such computer programs and are embodied in carrier waves.

In the applications of the invention as the computer programs and the recording media in which the computer programs are recorded, the invention may be given as a whole program for controlling the operations of the client or the operations of the distributed printing control device or as a partial program for exerting only the characteristic functions of the invention. Available examples of the recording media include ROM cartridges, punched cards, prints with barcodes or other codes printed thereon, internal storage devices (memories like RAMs and ROMs) and external storage devices of the computer, and diversity of other computer readable media.

### Brief Description of the Drawings

Fig. 1 schematically illustrates the configuration of a distributed printing system in a first embodiment of the invention;
Fig. 2 shows the schematic structure of a printer PRT1;
Fig. 3 shows the schematic structure of a client included in the distributed printing system of the first embodiment;
Fig. 4 shows a distributed printing MIB stored in an MIB storage area 30b in a custom network board CNB and an MIB stored in a memory of a distribution destination printer;
Fig. 5 is a flowchart showing a print job progress status display process executed in the first embodiment;
Fig. 6 shows one example of a distributed printing list display window generated by a window generation module 101b;
Fig. 7 shows one example of a distributed printing details display window generated by the window generation module 101b;
Fig. 8 is a flowchart showing a print job progress status display process executed in a second embodiment of the invention;
Fig. 9 schematically illustrates the configuration of a distributed printing system including a printer PRT1 in a third embodiment of the invention;
Fig. 10 shows the schematic structure of the printer PRT1 shown in Fig. 1;
Fig. 11 shows the schematic structure of a client included in the distributed printing system of the third embodiment;
Fig. 12 shows one example of a distributed printing list display window generated by a window generation module 301b;
Fig. 13 is a flowchart showing a print job cancellation process executed in the third embodiment;
Fig. 14 shows one example of a distributed printing list display window generated by the window generation module 301b;
Fig. 15 is a flowchart showing a print job cancellation process executed in the fourth embodiment; and
Fig. 16 shows one example of a distributed printing details display window generated by the window generation module 301b.

### Best Modes of Carrying Out the Invention

Some modes of carrying out the invention are described below in the following sequence as preferred embodiments with reference to the accompanied drawings:
A. First Embodiment
   A1. General Configuration of Distributed Printing System and General Flow of Distributed Printing Process
   A2. General Structures of Printer and Client
   A3. Outline of MIB Value Setting Process
   A4. Concrete Procedure of Print Job Progress Status Display Process
   A5. Effects of Embodiment
B. Second Embodiment
   B1. Concrete Procedure of Print Job Progress Status Display Process
   B2. Effects of Embodiment
C. Third Embodiment
   C1. General Configuration of Distributed Printing System and General Flow of Distributed Printing Process
   C2. General Structure of Printer
   C3. General Structure of Client
   C4. Concrete Procedure of Print Job Cancellation Process
   C5. Effects of Embodiment
D. Fourth Embodiment
   D1. Concrete Procedure of Print Job Cancellation Process
   D2. Effects of Embodiment
E. Modifications

### A. First Embodiment

### A1. General Configuration of Distributed Printing System and

### General Flow of Distributed Printing Process

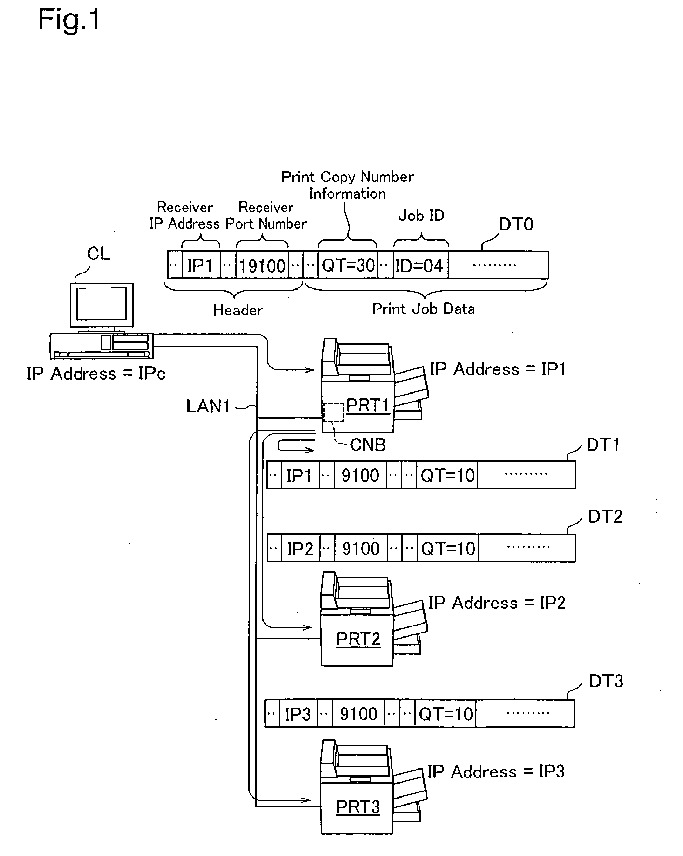

Fig. 1 schematically illustrates the configuration of a distributed printing system in a first embodiment of the invention. The distributed printing system of the first embodiment includes a client PC (hereafter simply referred to as 'client') CL and multiple printers PRT1 through PRT3. The client CL and the multiple printers PRT1 through PRT3 are interconnected via a local area network LAN1. Communication between the respective devices follows TCP/IP protocol, so that one fixed IP address is uniquely allocated to each device. For the convenience of explanation, the following explanation is on the assumption that a unique address 'IPc' is allocated to the client CL and unique addresses 'IP1' through 'IP3' are respectively allocated to the printers PRT1 through PRT3. Strictly speaking, these IP addresses are not set in the client CL or the printers PRT1 to PRT3, but are set at nodes (for example, network boards) in the IP network.

A custom network board CNB is built in the printer PRT1 among these printers PRT1 to PRT3. The custom network board CNB has distributed printing control functions to distribute a received print job to other printers and implement distributed printing, and is equivalent to the distributed printing control device of the invention. Standard network boards (not shown) are built in the other printers PRT2 and PRT3.

In the illustrated example of Fig. 1, communication data DT0 including a print job is sent from the client CL to the printer PRT1.

The communication data DT0 has a header and print job data. The header includes the IP address (receiver IP address) 'IP1' of the printer PRT1 as a receiver of the communication data DT0 and a port number (receiver port number) '19100' for identifying a receiver software program installed in the printer PRT1. The print job data includes a QT value '30' representing the number of print copies as print copy number information and a job ID '04' specified by the client CL for identification of the print job.

The printing protocol used in this embodiment is a non-procedural protocol. A port number '9100' is generally allocated to the non-procedural protocol. The procedure of this embodiment, however, uses a particular port number '19100' instead of the general number '9100' to send the print job from the client CL to the printer PRT1 having the distributed printing control functions.

The custom network board CNB built in the printer PRT1 receives the communication data DT0 and transfers the print job data included in the received communication data DT0 to the software program standing by at a port having the receiver port number '19100'. In this embodiment, the software program standing by at the port with the port number '19100' is a distributed printing software program to attain the distributed printing control functions. A functional block actualized by an internal CPU of the custom network board CNB exerts the required functions according to the distributed printing software program. The functional block first stores the received print job data into a print job storage area (not shown in Fig. 1). The functional block then retrieves one or multiple printers that are online and are of an identical model with that of the self printer PRT1 among the printers connected to the local area network LAN1 and specifies the retrieved printers as distribution destination printers. In the illustrated example, the functional block specifies the printers PRT2 and PRT3 and the self printer PRT1 as distribution destination printers. In this case, the required '30' copies of the print job are distributed into the three distribution destination printers PRT1 through PRT3 for distributed printing. The functional block changes the QT value included in the print job data from '30 copies' to '10 copies' and the receiver port number from '19100' to '9100', and sends communication data DT1 through DT3 respectively including divisional print jobs to the distribution destination printers PRT1 to PRT3.

For example, the communication data DT2 includes 'IP2' as the receiver IP address, '9100' as the receiver port number, and '10 copies' as the QT value.

The standard network board built in the printer PRT2 receives the communication data DT2 and transfers the print job data included in the received communication data DT2 to the software program standing by at a port having the port number '9100'. As mentioned above, the port number '9100' is generally allocated to the non-procedural printing protocol. The print job data is accordingly transferred to a print control software program installed in the printer PRT2, which then performs printing according to the received divisional print job.

The other printer PRT3 and the printer PRT1 having the distributed printing control functions similarly perform printing according to the received divisional print jobs.

Each of the printers PRT1 through PRT3 performs printing of '10 copies'. The printing system thus completes distributed printing of the total '30 copies'.

### A2. General Structures of Printer and Client

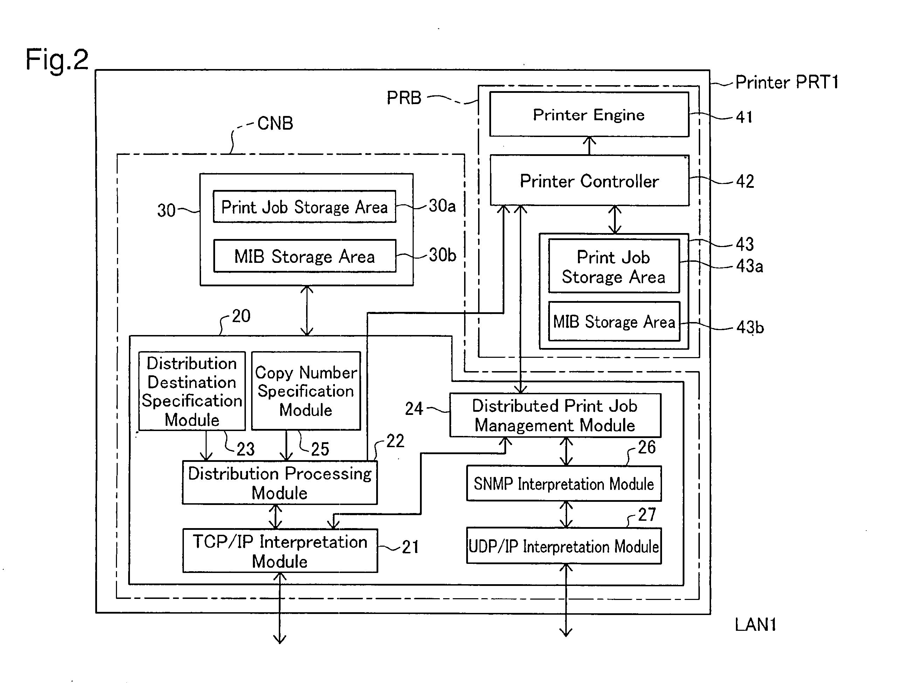

Fig. 2 shows the schematic structure of the printer PRT1 shown in Fig. 1. The printer PRT1 has a printer body PRB and the custom network board CNB. The printer body PRB mainly includes a printer engine 41, a printer controller 42, and a memory 43. The printer engine 41 is a mechanism driven to actually implement printing. The memory 43 has a print job storage area 43a for temporary storage of print job data to be printed by the printer engine 41, and an MIB storage area 43b for storage of an MIB (Management Information Base) representing management information including the working status of the printer body PRB and the progress status of each print job.

The printer controller 42 receives print job data from the custom network board CNB and stores the received print job data into the print job storage area 43a. The printer controller 42 reads the print job data from the print job storage area 43a and controls the printer engine 41 according to the read print job data to implement printing. The printer controller 42 also monitors the working status of the printer body PRB and the progress status of the print job (for example, completion of 1 copy) and sets the monitored pieces of information in the MIB stored in the MIB storage area 43b. In response to a request from a distributed print job management module 24 (described later), the printer controller 42 sends the setting values of respective management items in the MIB (hereafter referred to as 'MIB value') stored in the MIB storage area 43b to the distributed print job management module 24.

The custom network board CNB mainly includes a CPU 20 and a memory 30. Other elements of the custom network board CNB including a communication interface for network communication are omitted for the simplicity of explanation.

The memory 30 has a print job storage area 30a for temporary storage of print job data sent from the client CL, and an MIB storage area 30b for storage of an MIB (distributed printing MIB) representing management information including the working status of the custom network board CNB and distributed print job-related information (for example, IP addresses of distribution destination printers).

The CPU 20 reads the distributed printing software program, a distributed print job management software program, and other required relevant programs from the memory 30 and executes these programs to work as respective functional blocks illustrated in Fig. 2. The arrows between the respective functional blocks show the flows of data. These functional blocks may be actualized by the hardware configuration, instead of the software configuration.

Among the functional blocks, a TCP/IP interpretation module 21 interprets the TCP/IP protocol and establishes communication with the outside via the network. The TCP/IP interpretation module 21 detects a receiver IP address and a receiver port number included in received communication data, while attaching a receiver IP address and a receiver port number to communication data to be sent. A distribution destination specification module 23 retrieves available printers for distributed printing on the local area network LAN1 and specifies the retrieved printers as distribution destination printers. A distribution processing module 22 stores print job data received from the client CL into the print job storage area 30a, while rewriting the QT value representing the number of print copies in the stored print job data and distributing divisional print job data respectively including the rewritten QT values to the respective distribution destination printers.

In response to a request from the client CL, the distributed print job management module 24, which is characteristic of the present invention, acquires MIB values from the respective distribution destination printers and sends back specified MIB values to the client CL, based on the acquired MIB values and the distributed printing MIB values.

The distributed print job management module 24 receives and sends data from and to each distribution destination printer based on the SNMP (Simple Network Management Protocol). An SNMP interpretation module 26 interprets the SNMP protocol and transfers data, which has been sent from each distribution destination printer, to the distributed print job management module 24, while transferring data, which is to be sent to each distribution destination printer, to a UDP/IP interpretation module 27. The UDP/IP interpretation module 27 interprets the UDP/IP protocol and makes communication with the outside via the network.

The printer PRT1 includes a non-procedural program interpretation module for interpreting the non-procedural printing protocol and other relevant modules, in addition to the functional blocks described above. These modules are omitted for the simplicity of explanation.

In each of the printers PRT2 and PRT3 shown in Fig. 1, a printer body has similar structure and functions to those of the printer body PRB of the printer PRT1 described above and includes a printer engine, a printer controller, and a memory (having a print job storage area and an MIB storage area). The printer PRT2 or PRT3 also has a TCP/IP interpretation module, a UDP/IP interpretation module, an SNMP interpretation module, and a non-procedural protocol interpretation module as the functional blocks.

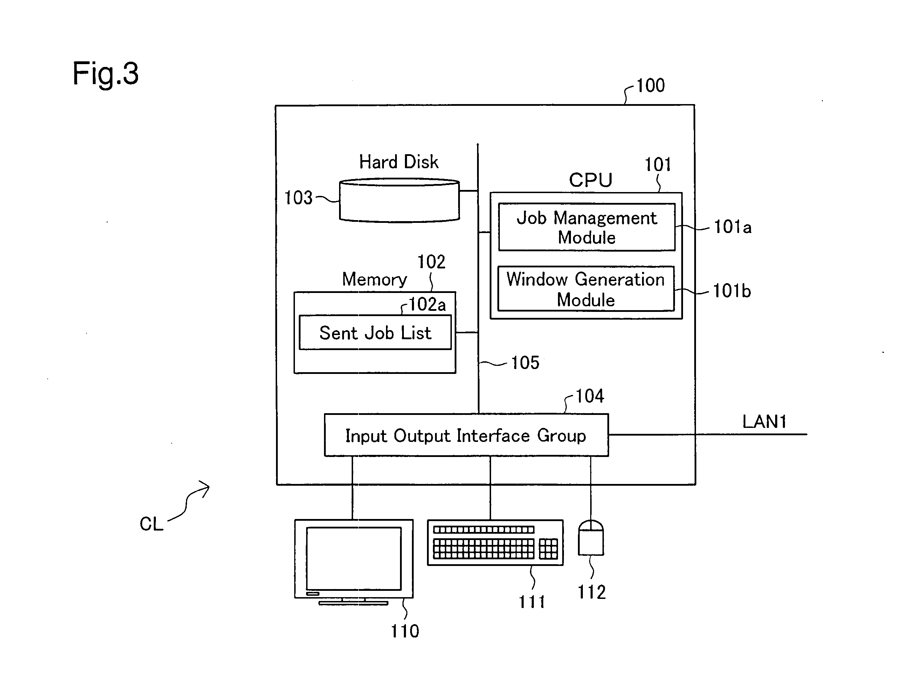

Fig. 3 shows the schematic structure of the client included in the distributed printing system of the first embodiment.

The client CL includes a computer 100, a keyboard 111 and a mouse 112 as data input devices for data input into the computer 100, and a display 110 as a data output device for data output from the computer 100.

The computer 100 mainly has a CPU 101, a memory 102, a hard disk 103, and an input output interface group 104, which are interconnected by an internal bus 105. The input output interface group 104 includes multiple interfaces for connecting the keyboard 111, the mouse 112, the display 110, and the local area network LAN1 to the computer 100.

The client CL is under control of a specific operating system and executes an application program for displaying the progress status of each print job. Relevant drivers are incorporated in the operating system to control the operations of the keyboard 111, the mouse 112, and the display 110.

When the application program is activated and loaded in the memory 102, the CPU 101 executes the application program to function as a job management module 101a and a window generation module 101b.

The client CL also includes a non-procedural protocol interpretation module, a TCP/IP interpretation module, and a print job generation module as functional blocks, in addition to the job management module 101a and the window generation module 101b. These functional blocks are omitted for the simplicity of explanation.

When the user gives the client CL a print command with setting '30 copies' as the required number of print copies, the print job generation module generates a print job with setting a job ID (for example, '04') and the QT value '30' as the number of print copies and sends the generated print job to the printer PRT1 via the non-procedural protocol interpretation module and the TCP/IP interpretation module. The TCP/IP interpretation module specifies 'IPI' and '19100' as the receiver IP address and the receiver port number. The communication data DT0 shown in Fig. 1 is accordingly sent from the client CL to the printer PRT1.

A sent job list 102a is stored in advance in the memory 102. The sent job list 102a includes information related to each print job sent to the printer PRT1, that is, a job ID of the print job, a document name, the number of print copies, and the name of the user requesting generation of the print job. Every time the print job generation module generates and sends one print job to the printer PRT1, the job ID and the other relevant pieces of information related to the currently sent print job are additionally written into the sent job list 102a.

### A3. Outline of MIB Value Setting Process

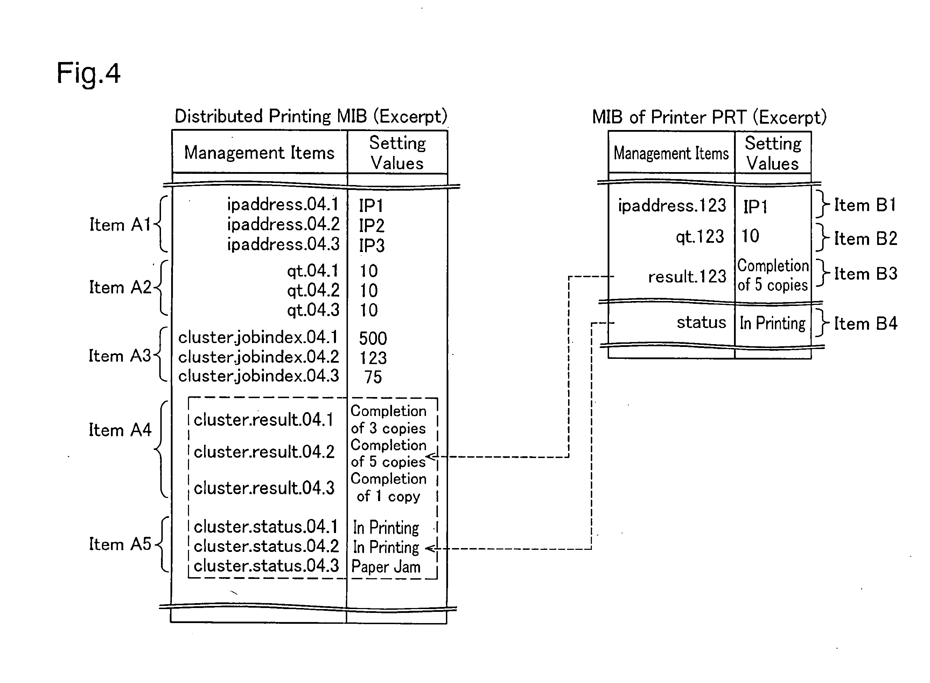

With regard to the distributed printing MIB of the custom network board CNB and the MIB of each distribution destination printer, the process of setting the MIB values in the management items is described below with reference to Fig. 4.

Fig. 4 shows the distributed printing MIB stored in the MIB storage area 30b in the custom network board CNB and the MIB stored in the memory of the distribution destination printer. In Fig. 4, the MIB of the printer PRT2 is shown as one example of the MIB stored in the memory of the distribution destination printer.

The left half of Fig. 4 shows the distributed printing MIB, and the right half shows the MIB of the printer PRT2. For the simplicity of explanation, the distributed printing MIB and the MIB of the printer PRT2 are partial excerpts.

In the distributed printing MIB and in the MIB of the printer PRT2 shown in Fig. 4, the left side and the right side respectively show management items and MIB values set in the corresponding management items.

In the distributed printing MIB shown in Fig. 4, an item A1 regards the IP addresses of the respective distribution destination printers, an item A2 regards the QT values set in divisional print jobs to be distributed to the respective distribution destination printers, and an item A3 regards the job index numbers allocated to the respective divisional print jobs by the distribution destination printers. An item A4 regards the numbers of print copies completed by the respective distribution destination printers as the results of the divisional print jobs, and an item A5 regards the working statuses of the respective distribution destination printers.

In the MIB of the printer PRT2 shown in Fig. 4, an item B1 regards the IP address of a sender of a received print job, an item B2 regards the QT value set in the received print job, an item B3 regards the number of completed print copies by the printer PRT2, and an item B4 regards the working status of the printer PRT2.

In the case of distribution of divisional print jobs to distribution destination printers, the distributed print job management module 24 (see Fig. 2) adds the items A1 and A2 in the distributed printing MIB and sets the MIB values in the corresponding items A1 and A2.

In the illustrated example, the client CL sends a print job with the job ID '04' to the printer PRT1, and the printer PRT1 distributes divisional print jobs with the set QT value = '10' to the printers PRT1 through PRT3 specified as the distribution destination printers. The distributed print job management module 24 first assigns job index numbers '04.1' through '04.3' to the three divisional print jobs distributed to the respective distribution destination printers PRT1 through PRT3. The job index numbers are assigned in relation to the job ID of the print job received from the client CL. The distributed print job management module 24 then adds the items A1 and A2 with regard to the three divisional print jobs having the assigned job index numbers and sets the IP addresses 'IP1' through 'IP3' of the distribution destination printers as the MIB values of the item A1 and the QT values = '10' as the MIB values of the item A2.

The printer PRT2 receives a divisional print job distributed from the printer PRT1 and newly assigns a job index number for identification of the received divisional print job. The printer controller of the printer PRT2 then adds the items B1 through B3 in the MIB of the printer PRT2 and sets the MIB values in the corresponding items B1 through B3. In the illustrated example, the printer PRT2 assigns a job index number '123' to the received divisional print job. The printer controller then sets the IP address 'IP1' of the printer PRTlor the sender of the received divisional print job with the assigned job index number '123' as the MIB value of the item B1 and the QT value = '10' as the MIB value of the item B2. The MIB value of the item B3 is set to 'completion of 0 copy' as the initial state and is sequentially updated to 'completion of 1 copy', 'completion of 2 copies' in response to completion of every print copy. In the illustrated condition of Fig. 4, since the print of 5 copies has been completed, 'completion of 5 copies' is set as the MIB value of the item B3.

Immediately after the distribution processing module 22 sends the divisional print jobs to the distribution destination printers, the distributed print job management module 24 (Fig. 2) sends a command defined by the SNMP protocol to the respective distribution destination printers and acquires the latest job index numbers assigned by the respective distribution destination printers.

Each of the distribution destination printers consecutively assigns a job index number, which is sequentially incremented by one, to each received divisional print job. The job index number consecutively assigned to each received divisional print job by the distribution destination printer is accordingly the latest job index number acquired from the distribution destination printer immediately after transmission of the divisional print job. The distributed print job management module 24 relates the acquired job index number to the job index number assigned in advance to the sent divisional print job in the custom board network CNB and sets the acquired job index number as the MIB value of the item A3 in the distributed printing MIB.

In the illustrated example of Fig. 4, the printer PRT2 assigns the job index number '123' to the received divisional print job distributed from the printer PRT1. The distributed print job management module 24 acquires the job index number '123' assigned by the printer PRT2 and sets the acquired job index number '123' as the MIB value of the item A3 in relation to the job index number '04.2' assigned in advance to the sent divisional print job in the custom board network CNB.

The current working status, for example, 'in printing' or 'paper jam', of the printer PRT2 is set as the MIB value of the item B4 in the MIB of the printer PRT2 shown in Fig. 4. The items A4 and A5 surrounded by the dotted line in the distributed printing MIB of Fig. 4 will be described later in detail.

### A4. Concrete Procedure of Print Job Progress Status Display Process

In one concrete example, the client CL has sequentially sent multiple communication data respectively including print jobs with job IDs '01' through '05' in this sequence to the printer PRT1. The print jobs with the job IDs '01' through '03' have been distributed to distribution destination printers and have been completed by the respective distribution destination printers. The print job with the job ID '04' has been distributed to the printers PRT1 through PRT3 specified as distribution destination printers and are currently being processed by the respective distribution destination printers PRT1 through PRT3. The print job with the job ID '05' has not been distributed since distribution destination printers are not determined. At present, the user activates the application program to display the progress statuses of the respective print jobs sent from the client CL. Activation of the application program starts a print job progress status display process, which is characteristic of the present invention.

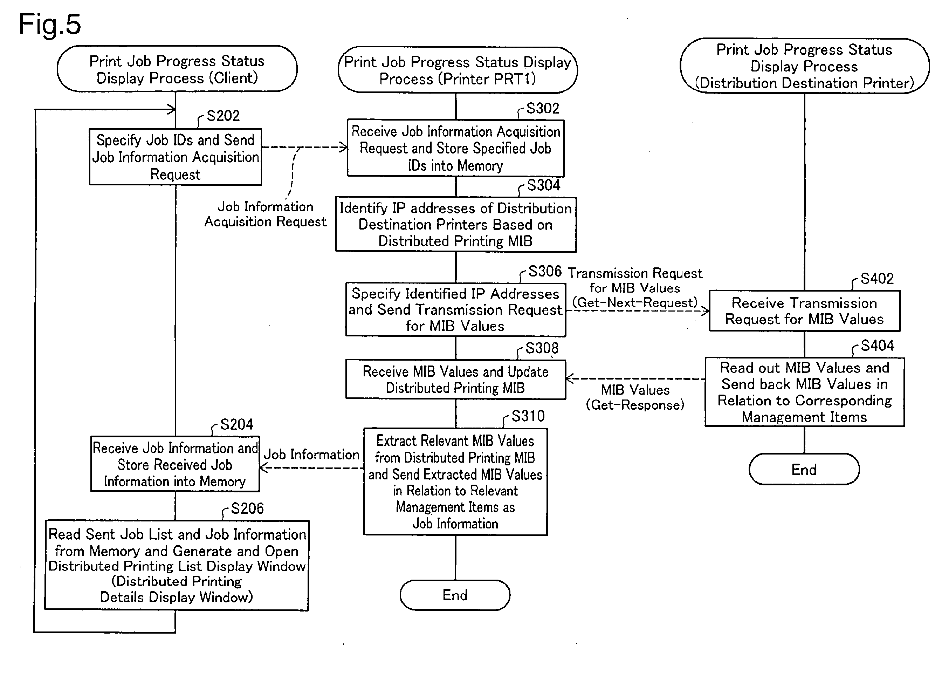

Fig. 5 is a flowchart showing the print job progress status display process executed in the first embodiment.

The left flow of Fig. 5 shows a processing flow executed by the client CL, the center flow shows a processing flow executed by the printer PRT1, and the right flow shows a processing flow executed by each distribution destination printer. In this concrete example, the printers PRT1 through PRT3 have been specified as distribution destination printers. The printer PRT1 accordingly executes both the center flow and the right flow. More specifically the custom network board CNB of the printer PRT1 executes the center flow, and the printer body PRB of the printer PRT1 executes the right flow.

In the print job progress status display process of Fig. 5, the job management module 101a in the client CL (see Fig. 3) first reads the sent job list 102a from the memory 102, specifies the job IDs written in the sent job list 102a, and sends a job information acquisition request to the printer PRT1 via the TCP/IP interpretation module (step S202).

In the concrete example, the print jobs with the job IDs '01' through '05' have been sent from the client CL to the printer PRT1. These job IDs '01' through '05' are accordingly written in the sent job list 102a. The job management module 101a of the client CL specifies these job IDs '01' through '05' and sends the job information acquisition request to the printer PRT1.

The job information includes required pieces of information for display of the progress statuses of the respective print jobs sent from the client CL to the printer PRT1. The job information regards the MIB values set in the item A1 (the IP addresses of the respective distribution destination printers), the item A2 (the QT values set in the divisional print jobs distributed to the respective distribution destination printers), the item A4 (the numbers of print copies completed by the respective distribution destination printers), and the item A5 (the working statuses of the respective distribution destination printers) in the distributed printing MIB shown in Fig. 4.

The distributed print job management module 24 in the printer PRT1 (see Fig. 2) receives the job information acquisition request via the TCP/IP interpretation module 21 and stores the specified job IDs into the memory 30 (step S302). The distributed print job management module 24 then reads the job IDs specified by the client CL from the memory 30 and identifies the IP addresses of the distribution destination printers with regard to each of the print jobs with the specified job IDs, based on the distributed printing MIB stored in the MIB storage area 30b (step S304).

In the illustrated example, the distributed print job management module 24 identifies the IP addresses 'IP1' through 'IP3' of the distribution destination printers with regard to the print job having the job ID '04', based on the MIB values of the item A1 set in the distributed printing MIB of Fig. 4.

The distributed print job management module 24 subsequently specifies the identified IP addresses and sends a transmission request for all the MIB values as a command defined by the SNMP protocol (Get-Next-Request command) to the respective distribution destination printers via the SNMP interpretation module 26 and the UDP/IP interpretation module 27 (step S306).

In each of the distribution destination printers, the printer controller receives the transmission request for all the MIB values from the printer PRT1 via the UDP/IP interpretation module and the SNMP interpretation module (step S402). The printer controller then sends back all the MIB values in relation to the corresponding management items in the MIB stored in the MIB storage area as a command defined by the SNMP protocol (Get-Response command) to the printer PRT1 via the SNMP interpretation module and the UDP/IP interpretation module (step S404).

The distributed print job management module 24 in the printer PRT1 receives the MIB values sent as the Get-Response commands from the respective distribution destination printers via the UDP/IP interpretation module 27 and the SNMP interpretation module 26. The distributed print job management module 24 refers to the received MIB values, newly adds the management items A4 and A5 regarding 'the numbers of print copies completed by the respective distribution destination printers' and 'the working statuses of the respective distribution destination printers' in the distributed printing MIB, and selects and sets the MIB values of the newly added management items A4 and A5 among all the received MIB values to update the distributed printing MIB (step S308).

As mentioned previously, the distributed printing MIB includes the correlation of the job index number assigned by each distribution destination printer to the job index number assigned by the custom network board CNB. Such correlation enables the distributed print job management module 24 to select and set the MIB values of the newly added management items among all the MIB values received from the respective distribution destination printers.

When the printer PRT2 sends back all the MIB values in relation to the corresponding management items in the MIB of the printer PRT2 (see Fig. 4), the distributed print job management module 24 newly adds the item A4 (the numbers of print copies completed by the respective distribution destination printers) and the item A5 (the working statuses of the respective distribution destination printers) in the distributed printing MIB shown in Fig. 4. The distributed print job management module 24 then selects and sets the MIB value 'completion of 5 copies' and 'in printing' of the newly added items A4 and A5 in correlation to the job index number '123' assigned by the printer PRT2 among all the received MIB values, as the MIB values with regard to the job index number '04.2' assigned by the custom network board CNB.

The distributed print job management module 24 reads the job IDs specified by the client CL from the memory 30, extracts the MIB values set in the management items to be sent as the job information with regard to the print jobs having the specified job IDs from the distributed printing MIB, and sends back the extracted MIB values as the job information to the client CL via the TCP/IP interpretation module 21 (step S310).

For example, the distributed print job management module 24 extracts the MIB values set in the items A1, A2, A4, and A5 with regard to the print job having the job ID '04' from the distributed printing MIB of Fig. 4 and sends back the extracted MIB values in correlation to the respective management items to the client CL.

The print job with the job ID '05' has not been distributed. The distributed printing MIB accordingly has no addition of any management items with regard to the print job with the job ID '05'. The distributed print job management module 24 accordingly does not send any job information with regard to the print job having the job ID '05'.

In the client CL, the job management module 101a receives the job information via the TCP/IP interpretation module from the printer PRT1 and stores the received job information into the memory 102 (step S204). The window generation module 101b then reads the sent job list 102a and the job information from the memory 102, generates a distributed printing list display window W1 based on the sent job list 102a and the job information, and opens the distributed printing list display window W1 on the display 110 (step S206).

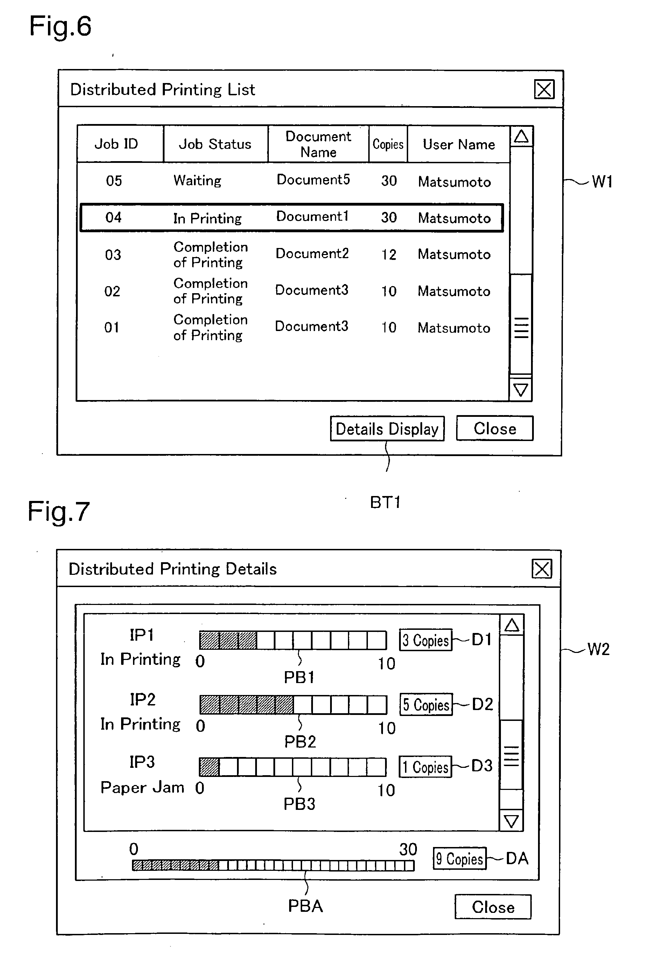

Fig. 6 shows one example of the distributed printing list display window generated by the window generation module 101b.

As shown in Fig. 6, the distributed printing list display window W1 shows the job ID of each print job, the document name, the number of print copies, and the name of the user requesting generation of the print job based on the contents of the sent job list 102a, as well as a 'job status'. The distributed printing list display window W1 also has a 'Details Display' button BT1 and a 'Close' button.

The 'job status' is based on the job information received from the printer PRT1.

For example, with regard to the print job having the job ID '04', the window generation module 101b compares the MIB value of the item A2 with the MIB value of the item A4 in the distributed printing MIB (see Fig. 4) among the job information received from the printer PRT1 and determines that the print job with the job ID '04' has not been completed by all the distribution destination printers. The 'job status' of the print job with the job ID '04' is accordingly 'in printing'. In this manner, the window generation module 101b individually determines that the print jobs with the jobs IDs '01', '02', and '03' have already been completed by all the distribution destination printers. The 'job statuses' of these print jobs with the job IDs '01', '02', and '03' are accordingly 'completion of printing'. The print job with the job ID '05' has neither the item A2 nor the item A4. The window generation module 101b accordingly determines that the print job with the job ID '05' has not been distributed and shows 'waiting' as the 'job status' of the print job with the job ID '05'.

When the user operates either the mouse 112 or the keyboard 111 (see Fig. 3) to specify a desired job ID and click the 'Details Display' button BT1 in the distributed printing list display window W1, the window generation module 101b generates a distributed printing details display window W2 based on the job information read from the memory 102 and opens the generated distributed printing details display window W2 on the display 110.

Fig. 7 shows one example of the distributed printing details display window generated by the window generation module 101b.

The distributed printing details display window W2 of Fig. 7 opens in response to the user's specification of the job ID '04' and the subsequent user's click of the 'Details Display' button BT1 in the distributed printing list display window W1 shown in Fig. 6. The distributed printing details display window W2 shows the IP addresses 'IP1' through 'IP3' of the printers PRT1 through PRT3 specified as the distribution destination printers, the working statuses of the printers PRT1 through PRT3 (for example, 'in printing' or 'paper jam'), progress bars PB1 through PB3 representing the progress statuses of the divisional print jobs distributed to the respective printers PRT1 through PRT3, and print copy number display boxes D1 through D3. The distributed printing details display window W2 also has an overall progress bar PBA representing the progress status of the whole print job having the job ID '04' and a total print copy number display box DA.

The progress bars PB1 through PB3 show the numbers of completed print copies in a dark color among the required numbers of copies to be printed by the respective distribution destination printers. In the progress bars PB1 through PB3, one scale unit denotes one copy. The left-most position on the scale represents '0' copy, and the right-most position on the scale represents the required number of copies to be printed. In the illustrated example, the print job with the job ID '04' is distributed as divisional print jobs with setting of the QT values = 10 to the respective distribution destination printers PRT1 through PRT3. Based on the 'QT values set in the divisional print jobs distributed to the respective distribution destination printers' stored as part of the job information in the memory 102, the window generation module 101b displays the number '0' at the left-most position and the number '10' at the right-most position on each of the progress bars PB1 through PB3.

Based on 'the numbers of print copies completed by the respective distribution destination printers' stored as part of the job information in the memory 102, the window generation module 101b specifies and displays the dark color areas in the respective progress bars PB1 through PB3 and shows the respective numbers of completed print copies in the print copy number display boxes D1 through D3.

The overall progress bar PBA shows the total number of completed print copies in the dark color among the total required number of copies to be printed for the whole print job with the job ID '04'. Like the progress bars PB1 through PB3, one scale unit denotes one copy in the overall progress bar PBA. The left-most position on the scale represents '0' copy, and the right-most position on the scale represents the total required number of copies to be printed. In the illustrated example, the print job with the job ID '04' is distributed as divisional print jobs with setting of the QT values = 10 to the respective distribution destination printers PRT1 through PRT3. Based on the 'QT values set in the divisional print jobs distributed to the respective distribution destination printers' stored as part of the job information in the memory 102, the window generation module 101b sums up the QT values and displays the number '0' at the left-most position and the calculated total number '30' at the right-most position on the overall progress bar PBA.

Based on 'the numbers of print copies completed by the respective distribution destination printers' stored as part of the job information in the memory 102, the window generation module 101b sums up the total number of completed print copies, specifies and displays the dark color area in the overall progress bar PBA based on the calculated total number '9 copies', and shows the calculated total number '9 copies' in the total print copy number display box DA.

The user is allowed to specify one of the job IDs '01' through '03' and subsequently click the 'Details Display' button BT1 in the distributed printing list display window W1 shown in Fig. 6. The print jobs with these job IDs '01' through '03' have already been completed by all the distribution destination printers. The overall progress bar PBA and the progress bars of the respective distribution destination printers are thus fully displayed in the dark color in the distributed printing details display window W2 shown in Fig. 7. For example, when a completed print job sent from the client CL to the printer PRT1 has the QT value = 50, the total print copy number display box DA shows '50 copies' in the distributed printing details display window W2. When the user specifies the job ID '05' in the distributed printing list display window W1 of Fig. 6, the 'Details Display' button BT1 is grayed out to prohibit the user's click. The distributed printing details display window W2 is accordingly not opened for the print job with the job ID '05'.

Referring back to the flowchart of Fig. 5, the client CL repeats the processing of steps S202 to S206 after the window generation module 101b generates and opens the distributed printing list display window W1 of Fig. 6 at step S206.

The distributed print job management module 24 in the printer PRT1 again receives the job information acquisition request from the client CL and restarts the relevant processing flow of the print job progress status display process. The printer controller in each distribution destination printer again receives the Get-Next-Request command from the printer PRT1 and restarts the relevant processing flow of the print job progress status display process.

The client CL then receives the latest job information at step S204 and generates and opens the updated distributed printing list display window W1 based on the received latest job information step S206. When the distributed printing details display window W2 is opened on the display 110 of the client CL at step S206 in the previous cycle of the processing flow, the window generation window 101b generates and opens the updated distributed printing details display window W2, instead of the distributed printing list display window W1, at step S206 in the current cycle.

The divisional print jobs distributed to the respective distribution destination printers are successively processed to increase the numbers of print copies completed by the respective distribution destination printers. The repeated processing flow of the print job progress status display process thus successively updates the progress bars PB1 through PB3, the print copy number display boxes D1 through D3, the overall progress bar PBA, and the total print copy number display box DA in the distributed printing details display window W2 shown in Fig. 7.

### A5. Effects of Embodiment

As described above, in the case of distribution of a print job received from the client CL, the printer PRT1 stores the IP addresses of the distribution destination printers and other required pieces of information as the MIB values.

In response to transmission of the job information acquisition request from the client CL to the printer PRT1, the printer PRT1 sends the Get-Next-Request command to the respective distribution destination printers based on the IP addresses of the distribution destination printers stored as the MIB values. The printer PRT1 then receives the MIB values as the Get-Response command from the respective distribution destination printers in response to the Get-Next-Request command and sends back the job information to the client CL based on the received MIB values. The client CL can accordingly obtain the job information even when the client CL is not informed of specification of the distribution destination printers with regard to a sent print job.

The job information includes the MIB values for the IP addresses of the respective distribution destination printers, the QT values set in the divisional print jobs distributed to the respective distribution destination printers, the numbers of print copies completed by the respective distribution destination printers, and the working statuses of the respective distribution destination printers. Based on the job information received from the printer PRT1, the client CL generates and opens the distributed printing details display window W2. The distributed printing details display window W2 includes the IP addresses of the respective distribution destination printers, the progress bars representing the progress statuses of the divisional print jobs distributed to the respective distribution destination printers, and the print copy number display boxes showing the numbers of print copies completed by the respective distribution destination printers. Such display allows the user to readily identify the distribution destination printers and check the progress statuses of the divisional print jobs distributed to the respective distribution destination printers, even when the user is not informed of specification of the distribution destination printers with regard to a sent print job.

Based on the received job information, the client CL sums up the numbers of print copies completed by the respective distribution destination printers, and figures up the QT values set in the divisional print jobs distributed to the respective distribution destination printers. The distributed printing details display window W2 generated and opened by the client CL includes the overall progress bar PBA and the total print copy number display box DA with regard to a whole print job sent from the client CL to the printer PRT1. The user can thus readily check the overall progress status of the whole print job sent from the client CL to the printer PRT 1.

### B. Second Embodiment

In the distributed printing system of the first embodiment described above, the printer PRT1 sends the Get-Next-Request command to each distribution destination printer to obtain the MIB values. In a distributed printing system of a second embodiment, on the other hand, the client CL sends the Get-Next-Request command to each distribution destination printer.

The configuration of the distributed printing system and the structures of the printers PRT1 through PRT3 in the second embodiment are identical with those of the first embodiment shown in Figs. 1 and 2 and are thus not specifically described here. The client CL of the second embodiment has an SNMP interpretation module and a UDP/IP interpretation module as additional functional blocks. Otherwise the structure of the client CL in the second embodiment is identical with that of the first embodiment shown in Fig. 3 and is thus not described in detail. The MIB value setting process of the second embodiment is equivalent to the MIB value setting process of the first embodiment and is thus not specifically described here.

### B1. Concrete Procedure of Print Job Progress Status Display Process

Like the first embodiment described above, in one concrete example, the client CL has sequentially sent multiple communication data respectively including print jobs with job IDs '01' through '05' in this sequence to the printer PRT1. The print jobs with the job IDs '01' through '03' have been distributed to distribution destination printers and have been completed by the respective distribution destination printers. The print job with the job ID '04' has been distributed to the printers PRT1 through PRT3 specified as distribution destination printers and are currently being processed by the respective distribution destination printers PRT1 through PRT3. The print job with the job ID '05' has not been distributed since distribution destination printers are not determined. At present, the user activates the application program to display the progress statuses of the respective print jobs sent from the client CL. Activation of the application program starts a print job progress status display process, which is characteristic of the present invention.

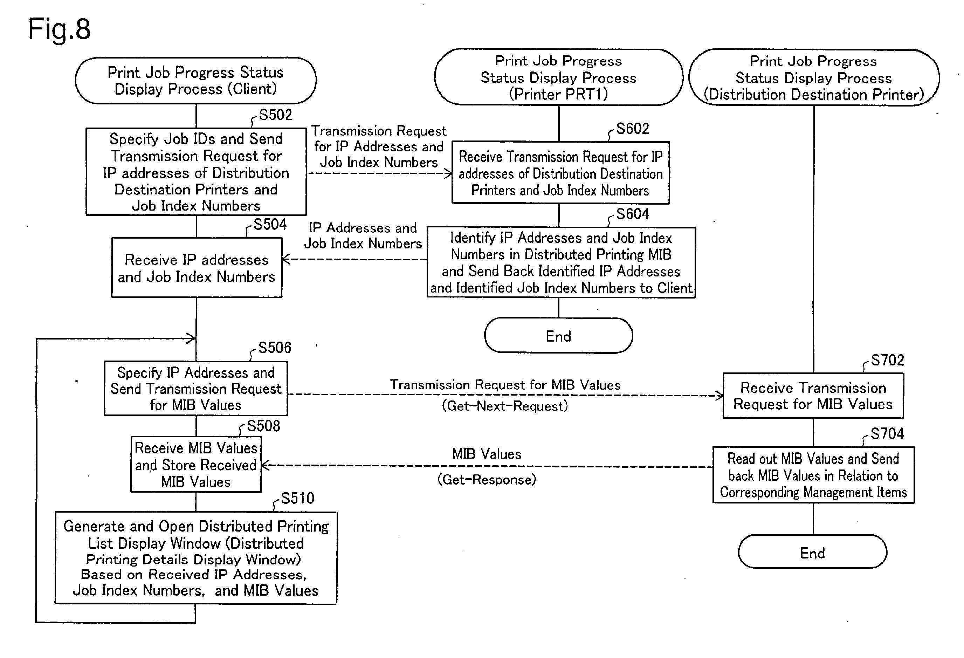

Fig. 8 is a flowchart showing the print job progress status display process executed in the second embodiment.

The left flow of Fig. 8 shows a processing flow executed by the client CL, the center flow shows a processing flow executed by the printer PRT1, and the right flow shows a processing flow executed by each distribution destination printer. Like the first embodiment described above, the custom network board CNB of the printer PRT1 executes the center flow, and the printer body PRB of the printer PRT1 executes the right flow.

In the print job progress status display process of Fig. 8, the job management module 101a in the client CL (see Fig. 3) first reads the sent job list 102a from the memory 102, specifies the job IDs written in the sent job list 102a, and sends a transmission request for IP addresses of distribution destination printers and job index numbers assigned by the respective distribution destination printers to the printer PRT1 via the TCP/IP interpretation module (step S502).

The distributed print job management module 24 in the printer PRT1 (see Fig. 2) receives the transmission request for the IP addresses and the job index numbers from the client CL via the TCP/IP interpretation module 21 and stores the specified job IDs into the memory 30 (step S602). The distributed print job management module 24 then reads the job IDs specified by the client CL from the memory 30, identifies the IP addresses of the distribution destination printers and the job index numbers assigned by the respective distribution destination printers with regard to each of the print jobs with the specified job IDs, based on the distributed printing MIB stored in the MIB storage area 30b, and sends back the identified IP addresses and the identified job index numbers to the client CL via the TCP/IP interpretation module 21 (step S604).

In the illustrated example, the distributed print job management module 24 identifies the IP addresses 'IP1' through'IP3' and the job index numbers '500', '123', and '75' with regard to the print job having the job ID '04', based on the MIB values of the items A1 and A3 set in the distributed printing MIB of Fig. 4 and sends back the identified IP addresses 'IP1' through 'IP3' and the identified job index numbers '500', '123', and '75' to the client CL.

The job management module 101a in the client CL receives the IP addresses of the distribution destination printers and the job index numbers from the printer PRT1 via the TCP/IP interpretation module and stores the received IP addresses and the received job index numbers into the memory 102 (step S504). The job management module 101a subsequently reads the IP addresses of the distribution destination printers from the memory 102, specifies the IP addresses, and sends a transmission request for all the MIB values as the Get-Next-Request command to the respective distribution destination printers via the SNMP interpretation module and the UDP/IP interpretation module (step S506).

The printer controller receives the transmission request for all the MIB values from the client CL via the UDP/IP interpretation module and the SNMP interpretation module (step S702). The printer controller then sends back all the MIB values in relation to the corresponding management items in the MIB stored in the MIB storage area as the Get-Response command to the client CL via the SNMP interpretation module and the UDP/IP interpretation module (step S704).

The job management module 101a in the client CL receives the MIB values from the respective distribution destination printers via the UDP/I-P interpretation module and the SNMP interpretation module and stores the received MIB values into the memory 102 (step S508).

The window generation module 101b reads from the memory 102 the IP addresses of the distribution destination printers and the job index numbers received from the printer PRT1 and the MIB values received from the respective distribution destination printers, generates a distributed printing list display window W1 based on the IP addresses, the job index numbers, and the MIB values, and opens the distributed printing list display window W1 on the display 110 (step S510).

The distributed printing list display window W1 of the second embodiment is identical with the distributed printing list display window W1 of the first embodiment shown in Fig. 6. As described in the first embodiment, the user's click of the 'Details Display' button BT1 in the distributed printing list display window W1 opens a distributed printing details display window W2, which is identical with the distributed printing details display window W2 of the first embodiment shown in Fig. 7.

For example, the job management module 101a in the client CL stores the MIB values set in the items A1 and A3 in the distributed printing MIB of Fig. 4 with regard to the print job having the job ID '04' into the memory 102.

The window generation module 101b in the client CL receives the MIB values set in the MIB of the printer PRT2 shown in Fig. 4 from the printer PRT2. Like the distributed print job management module 24 of the first embodiment described above, the window generation module 101b is thus informed of the MIB values set in the items A4 and A5 in the distributed printing MIB of Fig. 4, which are equivalent to the MIB values of the items B3 and B4 in the MIB of the printer PRT2. The window generation module 101b is also informed of the MIB value set in the item A2 in the distributed printing MIB of Fig. 4, which is equivalent to the MIB value of the item B2 in the MIB of the printer PRT2.

In the similar manner to the first embodiment, these MIB values enable the window generation module 101b to display the 'job status' in the distributed printing list display window W1, as well as the progress bars PB1 through PB3, the print copy number display boxes D1 through D3, the overall progress bar PBA, and the total print copy number display box DA in the distributed printing details display window W2.

Referring back to the flowchart of Fig. 8, the client CL repeats the processing of steps S506 to S510 after the window generation module 101b generates and opens the distributed printing list display window W1 at step S510. Each of the distribution destination printers restarts the relevant processing flow of the print job progress status display process to repeat the processing of steps S702 and S704.

As described above in the first embodiment, when the distributed printing details display window W2 is opened on the display 110 of the client CL at step S510 in the previous cycle of the processing flow, the window generation window 101b generates and opens the updated distributed printing details display window W2, instead of the distributed printing list display window VV1, at step S510 in the current cycle.

The repeated execution of steps S506 through S510 by the client CL and the repeated execution of steps S702 and S704 by each of the distribution destination printers enable the latest MIB values to be sent from each of the distribution destination printers to the client CL. As in the first embodiment described above, this processing flow effectively updates the displayed contents of the progress bars PB1 through PB3, the print copy number display boxes D1 through D3, the overall progress bar PBA, and the total print copy number display box DA in the distributed printing details display window W2.

### B2. Effects of Embodiment

As described above, in the case of distribution of a print job received from the client CL, the printer PRT1 stores the IP addresses of the distribution destination printers and other required pieces of information as the MIB values.

The client CL gives the printer PRT1 the transmission request for the IP addresses of the distribution destination printers and other required pieces of information. The client CL can accordingly obtain the IP addresses of the distribution destination printers and other required pieces of information even when the client CL is not informed of specification of the distribution destination printers with regard to a sent print job.

The client CL sends the Get-Next-Request command to the respective distribution destination printers based on the IP addresses of the distribution destination printers obtained from the printer PRT1. The client CL then receives the MIB values as the Get-Response command from the respective distribution destination printers in response to the Get-Next-Request command. The received MIB values include the working statuses of the respective distribution destination printers and the numbers of print copies completed by the respective distribution destination printers receiving the distributed divisional print jobs.

Based on the MIB values received from the respective distribution destination printers, the client CL generates and opens the distributed printing details display window W2. Such display allows the user to readily identify the distribution destination printers and check the progress statuses of the divisional print jobs distributed to the respective distribution destination printers, even when the user is not informed of specification of the distribution destination printers with regard to a sent print job.

### C. Third Embodiment

### C1. General Configuration of Distributed Printing System and

### General Flow of Distributed Printing Process

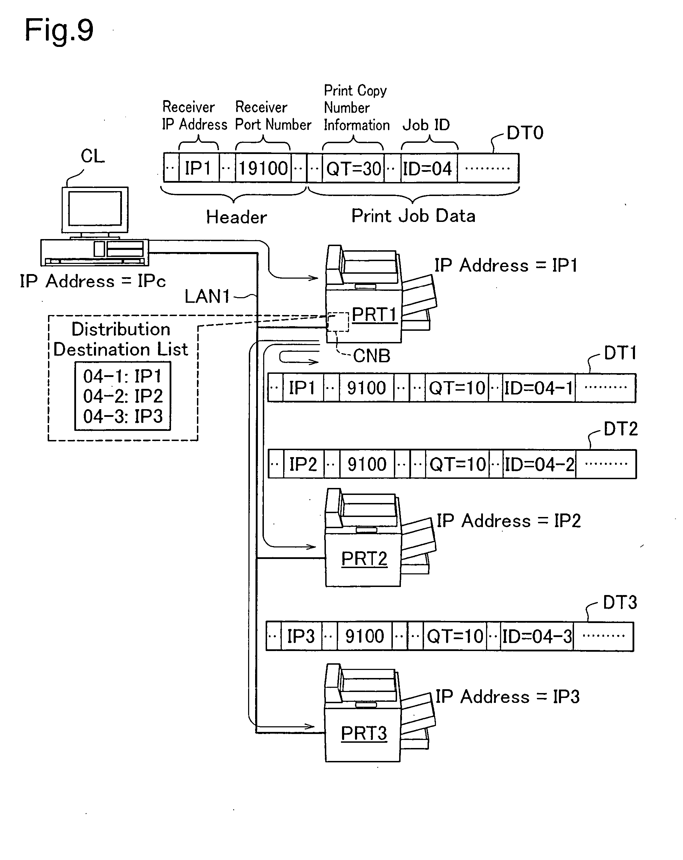

Fig. 9 schematically illustrates the configuration of a distributed printing system including a printer PRT1 in a third embodiment of the invention. The distributed printing system of the third embodiment has the configuration similar to the configuration of the distributed printing system of the first embodiment shown in Fig. 1, with some differences. The following description is mainly focused on the differences of the configuration.

As in the example of Fig. 1, in the illustrated example of Fig. 9, communication data DT0 including a print job is sent from the client CL to the printer PRT1.

The custom network board CNB built in the printer PRT1 receives the communication data DT0 and transfers the print job data included in the received communication data DT0 to the software program standing by at a port having the receiver port number '19100'. In this embodiment, the software program standing by at the port with the port number '19100' is a distributed printing software program to attain the distributed printing control functions. A functional block actualized by an internal CPU of the custom network board CNB exerts the required functions according to the distributed printing software program. The functional block first stores the received print job data into a print job storage area (not shown in Fig. 1). The functional block then retrieves one or multiple printers that are online and are of an identical model with that of the self printer PRT1 among the printers connected to the local area network LAN1 and specifies the retrieved printers as distribution destination printers. In the illustrated example, the functional block specifies the printers PRT2 and PRT3 and the self printer PRT1 as distribution destination printers. In this case, the required '30' copies of the print job are distributed into the three distribution destination printers PRT1 through PRT3 for distributed printing. The functional block changes the QT value included in the print job data from '30 copies' to '10 copies' and the receiver port number from '19100' to '9100', newly assigns job IDs '04-1' through '04-3' to divisional print jobs, and sends communication data DT1 through DT3 respectively including the divisional print jobs with the job IDs '04-1' through '04-3' to the distribution destination printers PRT1 to PRT3. The newly assigned job IDs are set in relation to an original job ID '04' of the print job received from the client CL.

For example, the communication data DT2 includes 'IP2' as the receiver IP address, '9100' as the receiver port number, '10 copies' as the QT value, and '04-2' as the job ID.

The functional block creates and stores a distribution destination list in a distribution destination list storage area (not shown). The distribution destination list stores the newly assigned job IDs '04-1' through '04-3' in correlation to the IP addresses 'IP1' through 'IP3' of the distribution destination printers as shown in Fig. 9. The distribution destination list is used in a print job cancellation process described later.

The standard network board built in the printer PRT2 receives the communication data DT2 and transfers the print job data included in the received communication data DT2 to the software program standing by at a port having the port number '9100'. As mentioned above; the port number '9100' is generally allocated to the non-procedural printing protocol. The print job data is accordingly transferred to a print control software program installed in the printer PRT2, which then performs printing according to the received divisional print job.

The other printer PRT3 and the printer PRT1 having the distributed printing control functions similarly perform printing according to the received divisional print jobs.

Each of the printers PRT1 through PRT3 performs printing of '10 copies'. The printing system thus completes distributed printing of the total '30 copies'.

### C2. General Structure of Printer

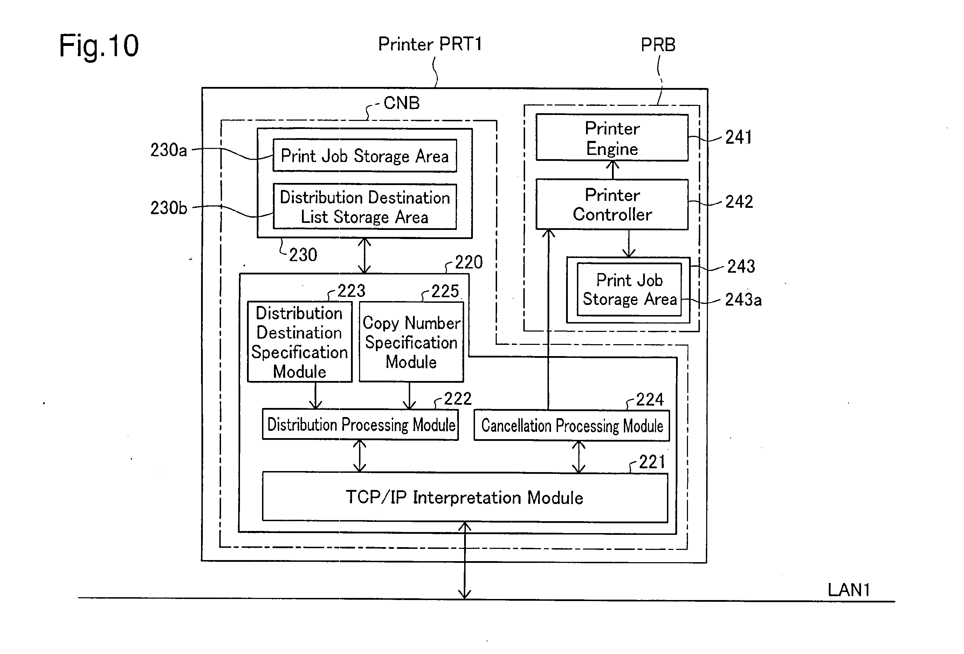

Fig. 10 shows the schematic structure of the printer PRT1 shown in Fig. 9. The printer PRT1 has a printer body PRB and the custom network board CNB. The printer body PRB mainly includes a printer engine 241, a printer controller 242, and a memory 243. The printer engine 241 is a mechanism driven to actually implement printing. The memory 243 has a print job storage area 243a for temporary storage of print job data to be printed by the printer engine 241.

The printer controller 242 receives print job data from the custom network board CNB and controls the printer engine 241 according to the received print job data to implement printing. The printer controller 242 also receives a cancellation command from a cancellation processing module 224 (described later) to cancel out a print job.

The custom network board CNB mainly includes a CPU 220 and a memory 230. Other elements of the custom network board CNB including a communication interface for network communication are omitted for the simplicity of explanation.

The memory 230 has a print job storage area 230a for temporary storage of print job data sent from the client CL, and a distribution destination list storage area 230b for storage of the distribution destination list.

The CPU 220 reads the distributed printing software program and a print job cancellation software program from the memory 230 and executes these programs to work as a TCP/IP interpretation module 221, a distribution processing module 222, a distribution destination specification module 223, a copy number specification module 225, as well as the cancellation processing module 224. The arrows between the respective functional blocks show the flows of data. These functional blocks may be actualized by the hardware configuration, instead of the software configuration.

Among the functional blocks, the TCP/IP interpretation module 221 interprets the TCP/IP protocol and establishes communication with the outside via the network. The TCP/IP interpretation module 221 detects a receiver IP address and a receiver port number included in received communication data, while attaching a receiver IP address and a receiver port number to communication data to be sent. The distribution destination specification module 223 retrieves available printers for distributed printing on the local area network LAN1 and specifies the retrieved printers as distribution destination printers. The copy number specification module 225 refers to the total number of required copies defined by print job data received from the client CL and determines the numbers of print copies to be allocated to respective distribution destination printers. The -distribution processing module 222 stores print job data received from the client CL into the print job storage area 230a, while rewriting the job ID and the QT value representing the number of print copies in the stored print job data and distributing divisional print job data respectively including the rewritten QT values and rewritten job IDs to the respective distribution destination printers. The distribution processing module 222 creates the distribution destination list and stores the distribution destination list into the distribution destination list storage area 230b.

In response to a cancellation command from the client CL, the cancellation processing module 224, which is characteristic of the present invention, sends a cancellation command to the distribution destination printers to cancel out divisional print jobs distributed to the distribution destination printers or cancels out a print job sent from the client CL and stored in the print job storage area 230a.

The cancellation processing module 224 is equivalent to the command transmission module and the control module of the invention.

The printer PRT1 includes a non-procedural program interpretation module for interpreting the non-procedural printing protocol and other relevant modules, in addition to the functional blocks described above. These modules are omitted for the simplicity of explanation.

In each of the printers PRT2 and PRT3 shown in Fig. 9, a printer body has similar structure and functions to those of the printer body PRB of the printer PRT1 described above and includes a printer engine, a printer controller, and a memory (having a print job storage area). The printer PRT2 or PRT3 also has a TCP/IP interpretation module and a non-procedural protocol interpretation module as the functional blocks.

### C3. General Structure of Client

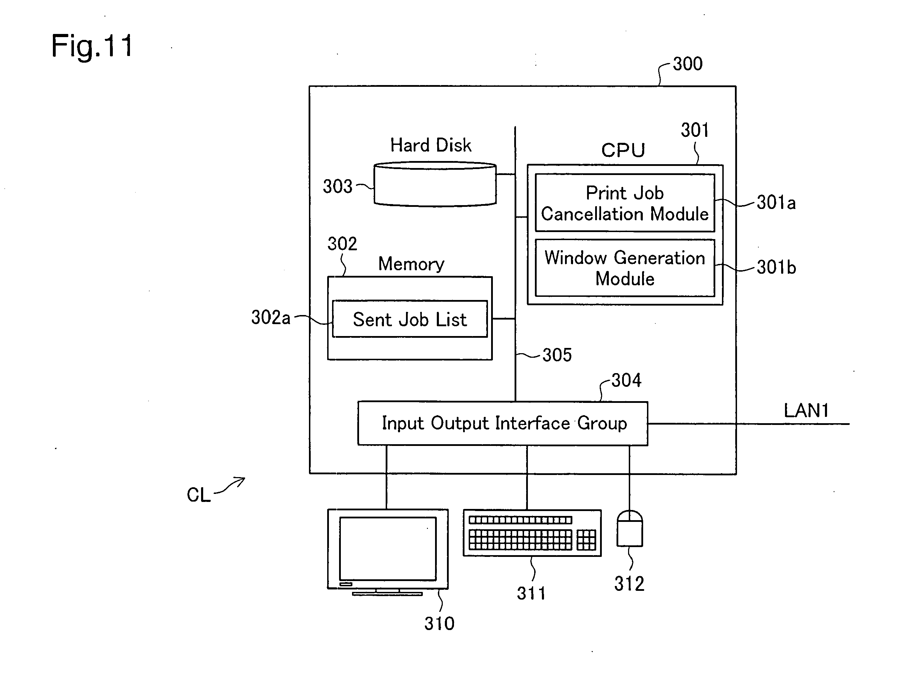

Fig. 11 shows the schematic structure of the client included in the distributed printing system of the third embodiment.

The client CL includes a computer 300, a keyboard 311 and a mouse 312 as data input devices for data input into the computer 300, and a display 310 as a data output device for data output from the computer 300.

The computer 300 mainly has a CPU 301, a memory 302, a hard disk 303, and an input output interface group 304, which are interconnected by an internal bus 305. The input output interface group 304 includes multiple interfaces for connecting the keyboard 311, the mouse 312, the display 310, and the local area network LAN1 to the computer 300.

The client CL is under control of a specific operating system and executes an application program for canceling a print job. Relevant drivers are incorporated in the operating system to control the operations of the keyboard 311, the mouse 312, and the display 310.

When the application program is activated and loaded in the memory 302, the CPU 301 executes the application program to function as a print job cancellation module 301a and a window generation module 301b.

The client CL also includes a non-procedural protocol interpretation module, a TCP/IP interpretation module, and a print job generation module as functional blocks, in addition to the print job cancellation module 301a and the window generation module 301b. These functional blocks are omitted for the simplicity of explanation.

When the user gives the client CL a print command with setting '30 copies' as the required number of print copies, the print job generation module generates a print job with setting a job ID (for example, '04') and the QT value '30' as the number of print copies and sends the generated print job to the printer PRT1 via the non-procedural protocol interpretation module and the TCP/IP interpretation module. The TCP/IP interpretation module specifies 'IP1' and '19100' as the receiver IP address and the receiver port number. The communication data DT0 shown in Fig. 9 is accordingly sent from the client CL to the printer PRT1.

A sent job list 302a is stored in advance in the memory 302. The sent job list 302a includes information related to each print job sent to the printer PRT1, that is, a job ID of the print job, a document name, and the number of print copies. Every time the print job generation module generates and sends one print job to the printer PRT1, the job ID, the document name, the number of print copies, and other required pieces of information with regard to the currently sent print job are additionally written into the sent job list 302a.

### C4. Concrete Procedure of Print Job Cancellation Process

In the illustrated example of Fig. 9, the communication data DT0 including the print job with the job ID '04' has been sent from the client CL to the printer PRT1. The printer PRT1 has generated communication data DT1 through DT3 as divisional print jobs from the received communication data DT0 and has sent the divisional print jobs with the job IDs '04-1' through '04-3' respectively to the printers PRT1 through PRT3. The printers PRT1 through PRT3 currently perform printing according to the divisional print jobs with the job IDs '04-1' through '04-3'. Under such circumstances, the user activates a print job cancellation application program installed in the client CL to cancel out the print job with the job ID '04' sent from the client CL.

In response to activation of this application program, the window generation module 301b (see Fig. 11) reads the sent job list 302a from the memory 302, generates a distributed printing list display window W11 based on the contents of the sent job list 302a, and opens the distributed printing list display window W11 on the display 310.

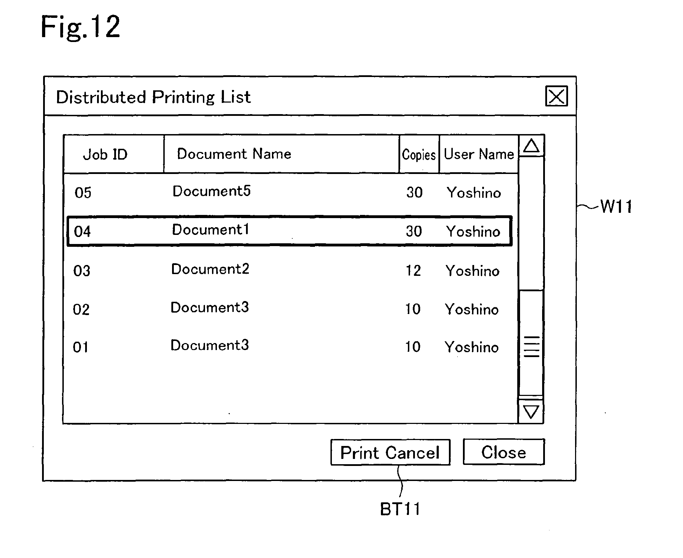

Fig. 12 shows one example of the distributed printing list display window generated by the window generation module 301b.

As shown in Fig. 12, the distributed printing list display window W11 shows the job ID of each print job, the document name, the number of print copies, and the name of the user requesting generation of the print job, based on the contents of the sent job list 302a. The distributed printing list display window W11 also has a 'Print Cancel' button BT11 operated to give a print cancellation instruction and a 'Close' button.

In the illustrated example, the user wants to cancel out the print job with the job ID '04'. In this case, the user operates the keyboard 311 or the mouse 312 (see Fig. 11) to specify the print job with the job ID '04' in the list of print jobs on the distributed printing list display window W11 and subsequently click the 'Print Cancel' button BT11.

In response to the user's click of the 'Print Cancel' button BT11, the client CL and the printers PRT1 through PRT3 start a print job cancellation process described below.

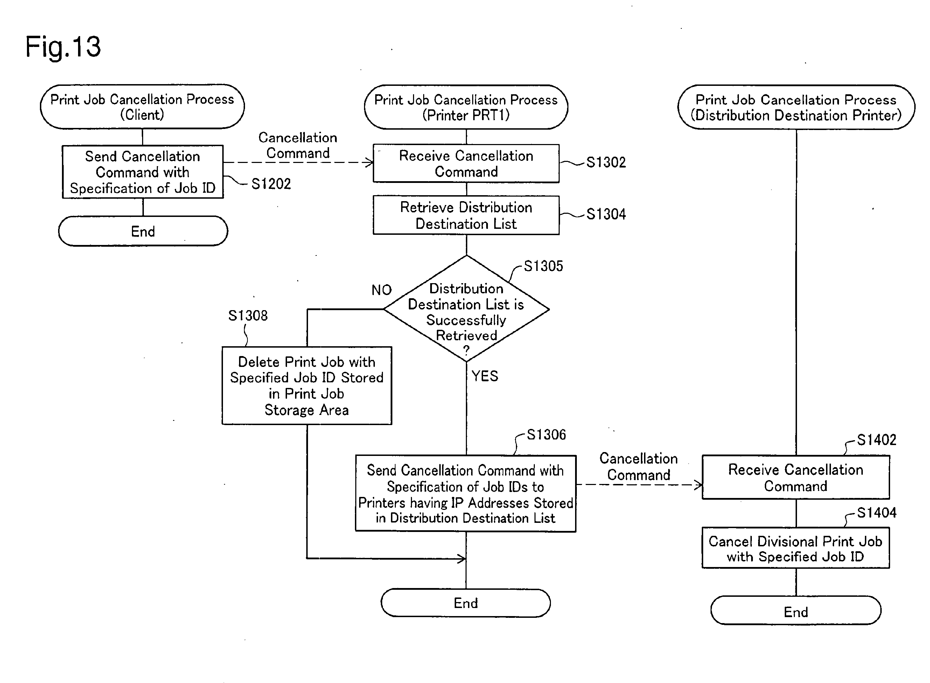

Fig. 13 is a flowchart showing the print job cancellation process executed in the third embodiment.

The left flow of Fig. 13 shows a processing flow executed by the client CL, the center flow shows a processing flow executed by the printer PRT1, and the right flow shows a processing flow executed by each distribution destination printer. In this concrete example, the printers PRT1 through PRT3 have been specified as distribution destination printers. The printer PRT1 accordingly executes both the center flow and the right flow. More specifically the custom network board CNB of the printer PRT1 executes the center flow, and the printer body PRB of the printer PRT1 executes the right flow.

In the print job cancellation process of Fig. 13, the print job cancellation module 301a in the client CL (see Fig. 11) first sends a cancellation command with specification of the job ID (for example, job ID '04') to the printer PRT1 via the TCP/IP interpretation module (step S202).

The cancellation processing module 224 in the printer PRT1 (see Fig. 10) receives the cancellation command with the specified job ID from the client CL via the TCP/IP interpretation module 221 (step S302). The cancellation processing module 224 subsequently retrieves the distribution destination list storage area 230b to find a distribution destination list with regard to the print job having the job ID '04' specified with the cancellation command (step S304).

As mentioned previously, in the case of distribution of a print job received from the client CL to distribution destination printers, a distribution destination list with regard to the print job is created and stored in the distribution destination list storage area 230b. The job IDs of divisional print jobs distributed to respective distribution destination printers are correlated to the job ID of an original print job received from the client CL.

In the illustrated example, the print job with the job ID '04' has been distributed to the printers PRT1 through PRT3 specified as the distribution destination printers. The distribution destination list of Fig. 9 has been created and stored in the distribution destination list storage area 230b. The cancellation processing module 224 retrieves the stored distribution destination list, based on the specified job ID '04'.

Upon successful retrieval of the distribution destination list, the cancellation processing module 224 sends a cancellation command with specification of the job IDs of divisional print jobs to the distribution destination printers having the IP addresses stored in the retrieved distribution destination list (step 5306). In the illustrated example, the distribution destination list of Fig. 9 stores the IP addresses 'IP1' through 'IP3' of the distribution destination printers. The cancellation processing module 224 accordingly sends the cancellation command to the printers PRT1 through PRT3. According to the concrete procedure, the cancellation processing module 224 sends the cancellation command with specification of the job IDs '04-2' and '04-3' to the printers PRT2 and PRT3 via the local area network LAN1. The cancellation processing module 224 also sends the cancellation command with specification of the job ID '04-1' to the printer body PRB of the self printer PRT1 via an inner bus (not shown) of the printer PRT1.

In each of the distribution destination printers, the printer controller receives the cancellation command with the specified job ID from the cancellation processing module 224 of the printer PRT1 (step S402). The printer controller then cancels out the divisional print job with the specified job ID (step S404).

For example, in response to the cancellation command with specification of the job ID '04-2' sent from the cancellation processing module 224, the printer controller 242 shown in Fig. 10 deletes the divisional print job data with the job ID '04-2' from the print job storage area 243a and eliminates image data generated by expansion of the divisional print job from the memory 234.

Upon failed retrieval of the distribution destination list with regard to the print job specified with the cancellation command in the distribution destination list storage area 230b, on the other hand, the print job with the specified job ID received from the client CL has not been distributed. In this case, the cancellation processing module 224 deletes the print job data with the specified job ID received from the client CL and stored in the print job storage area 230a (step S308).

The print job cancellation process accordingly cancels out the object print job with the specified job ID (for example, the job ID '04') in the respective distribution destination printers after the distribution of the print job or in the printer PRT1 before the distribution of the print job.

### C5. Effects of Embodiment

As described above, in the case of distribution of a print job received from the client CL, the printer PRT1 creates and stores a distribution destination list, which includes job IDs of divisional print jobs assigned by the printer PRT1 in relation to IP addresses of respective distribution destination printers receiving the divisional print jobs. The job IDs of divisional print jobs assigned by the printer PRT1 are correlated to the job ID of an original print job assigned by the client CL. In response to reception of a cancellation command with specification of a job ID from the client CL, the printer PRT1 retrieves the distribution destination list to identify the distribution destination printers of the specified job ID and sends a cancellation command to the identified distribution destination printers.

The client CL specifies the job ID of an object print job as a cancellation target and sends the cancellation command with the specified job ID to the printer PRT1. The printer PRT1 then sends the cancellation command to the distribution destination printers of the specified job ID. Even when the client CL is not informed of specification of the distribution destination printers with regard to the object print job as the cancellation target, this arrangement enables the client CL to adequately cancel out the object print job.

### D. Fourth Embodiment

In the distributed printing system of the third embodiment described above, the printer PRT1 sends the cancellation command to distribution destination printers to cancel out divisional print jobs distributed to the respective distribution destination printers. In a distributed printing system of a fourth embodiment, on the other hand, the client CL sends the cancellation command to distribution destination printers to cancel out divisional print jobs distributed to the respective distribution destination printers.

The configuration of the distributed printing system and the structures of the printers PRT1 through PRT3 and the client CL in the fourth embodiment are identical with those of the third embodiment shown in Figs. 9 through 11 and are thus not specifically described here.

### D1. Concrete Procedure of Print Job Cancellation Process

Like the third embodiment described above, in the illustrated example, the communication data DT0 including the print job with the job ID '04' has been sent from the client CL to the printer PRT1. The printer PRT1 has generated communication data DT1 through DT3 as divisional print jobs from the received communication data DT0 and has sent the divisional print jobs with the job IDs '04-1' through '04-3' respectively to the printers PRT1 through PRT3. The printers PRT1 through PRT3 currently perform printing according to the divisional print jobs with the job IDs '04-1' through '04-3'. Under such circumstances, the user activates a print job cancellation application program installed in the client CL to cancel out the print job with the job ID '04' sent from the client CL.

In response to activation of this application program, the window generation module 301b (see Fig. 11) reads the sent job list 302a from the memory 302, generates a distributed printing list display window W11 based on the contents of the sent job list 302a, and opens the distributed printing list display window W12 on the display 310.

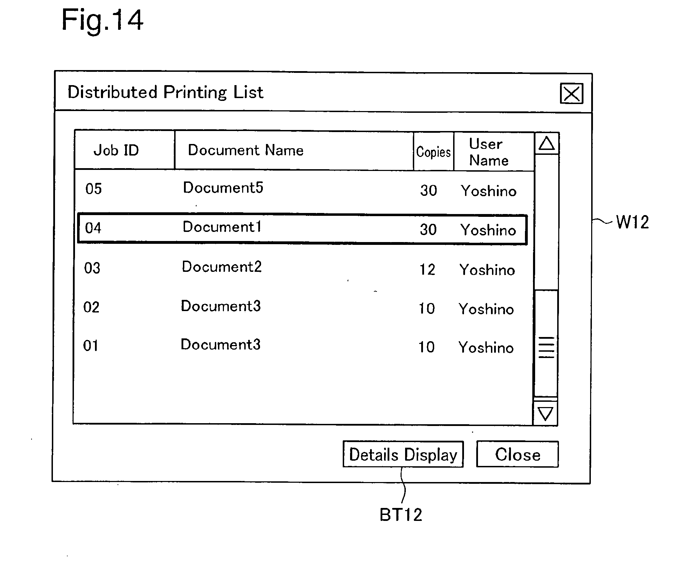

Fig. 14 shows one example of the distributed printing list display window generated by the window generation module 301b.

The distributed printing list display window W12 shown in Fig. 14 is similar to the distributed printing list display window W11 shown in Fig. 12, with replacement of the 'Print Cancel' button BT11 by a 'Details Display' button BT12.

In the illustrated example, the user wants to cancel out the print job with the job ID '04'. In this case, the user operates the keyboard 311 or the mouse 312 (see Fig. 11) to specify the print job with the job ID '04' in the list of print jobs on the distributed printing list display window W12 and subsequently click the 'Details Display' button BT12.

In response to the user's click of the 'Details Display' button BT12, the client CL and the printers PRT1 through PRT3 start a print job cancellation process described below.

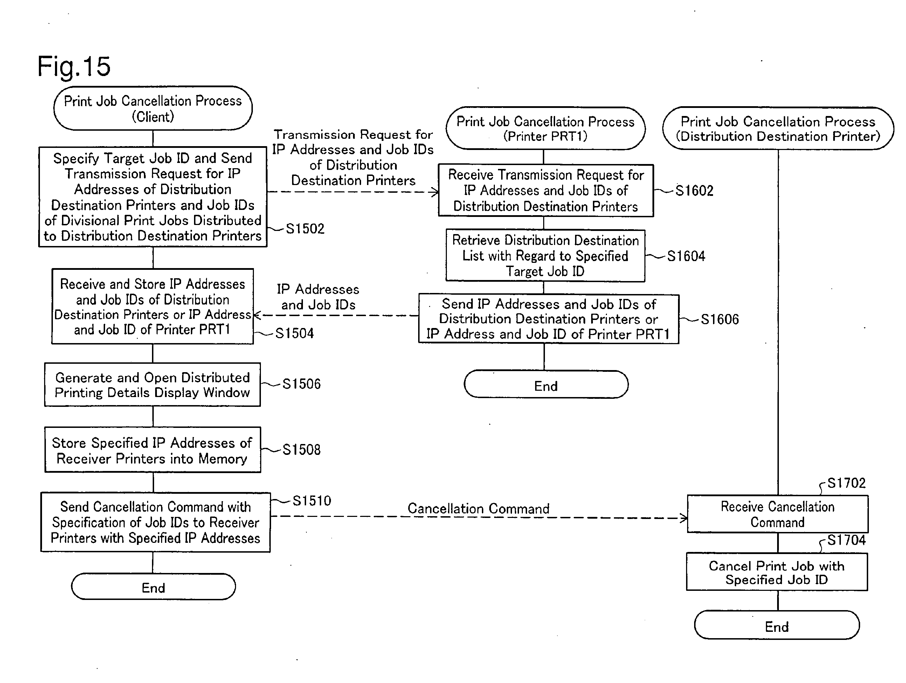

Fig. 15 is a flowchart showing the print job cancellation process executed in the fourth embodiment.

The left flow of Fig. 15 shows a processing flow executed by the client CL, the center flow shows a processing flow executed by the printer PRT1, and the right flow shows a processing flow executed by each distribution destination printer. Like the third embodiment described above, the printer PRT1 executes both the center flow and the right flow. More specifically the custom network board CNB of the printer PRT1 executes the center flow, and the printer body PRB of the printer PRT1 executes the right flow.

In the print job cancellation process of Fig. 15, the print job cancellation module 301a in the client CL (see Fig. 11) first specifies the job ID of an object print job as a cancellation target (for example, the job ID '04') and sends a transmission request for IP addresses of distribution destination printers and job IDs assigned by the printer PRT1 to relevant divisional print jobs distributed to the distribution destination printers to the printer PRT1 via the TCP/IP interpretation module (step S502).

The cancellation processing module 224 in the printer PRT1 (see Fig. 10) receives the transmission request from the client CL via the TCP/IP interpretation module 221 (step S602). The cancellation processing module 224 subsequently retrieves the distribution destination list storage area 230b to find a distribution destination list with regard to the print job having the specified job ID '04' (step S604).

Upon successful retrieval of the distribution destination list, the cancellation processing module 224 sends back the IP addresses of the distribution destination printers and the job IDs assigned by the printer PRT1 to the divisional print jobs distributed to the respective distribution destination printers (step S606). Upon failed retrieval of the distribution destination list, on the other hand, the cancellation processing module 224 sends back the IP address of the printer PRT1 and the job ID of the print job, which has been received from the client CL, to the client CL (step S606).

In the illustrated example, the object print job with the job ID '04' has been distributed to the printers PRT1 through PRT3, and the distribution destination list of Fig. 9 has been stored in the distribution destination list storage area 230b. In this case, the cancellation processing module 224 sends back the IP addresses 'IP1' through 'IP3' and the correlated job IDs '04-1' through '04-3' stored in the distribution destination list to the client CL.

In the case where the object print job has not been distributed, there is no distribution destination list with regard to the object print job. In this case, the cancellation processing module 224 sends back the IP address 'IP1' of the printer PRT1 and the job ID '04' of the object print job, which has been received from the client CL, to the client CL.

The print job cancellation module 301a in the client CL receives the IP addresses and the job IDs from the printer PRT1 via the TCP/IP interpretation module and stores the received IP addresses and job IDs into the memory 302 (step S504). The window generation module 301b then reads the IP addresses, which have been received from the printer PRT1 and stored, from the memory 302, generates a distributed printing details display window W13, and opens the distributed printing details display window W13 on the display 310 (step S506).

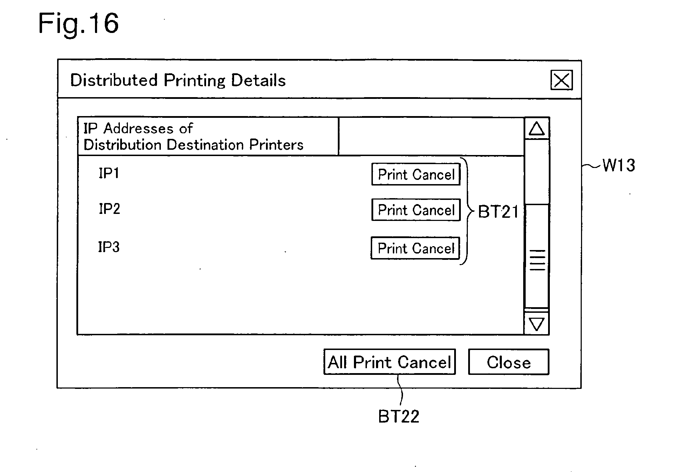

Fig. 16 shows one example of the distributed printing details display window W13 generated by the window generation module 301b in the client CL.

In the illustrated example, the print job with the job ID '04' has been distributed to the printers PRT1 through PRT3. The distributed printing details display window W13 of Fig. 16 accordingly shows the IP addresses 'IP1' through 'IP3' of the distribution destination printers. The distributed printing details display window W13 has 'Print Cancel' buttons BT21 provided for the respective distribution destination printers and operated to give cancellation instructions for respective divisional print jobs distributed to the distribution destination printers. The distributed printing details display window W13 also has an 'All Print Cancel' button BT22 operated to give an overall cancellation instruction for all the divisional print jobs and a close button.

In this example, the user wants to cancel out the whole print job with the job ID '04' and accordingly operates the mouser 312 (see Fig. 11) to click the 'All Print Cancel' button BT22. For cancellation of a divisional print job distributed to a certain distribution destination printer, the user is required to click the 'Print Cancel' button BT21 provided for the certain distribution destination printer.

In response to the user's click of the 'All Print Cancel' button BT22, the print job cancellation module 301a in the client CL specifies all the IP addresses ('IP1' through 'IP3') on the distributed printing details display window W13 as IP addresses of receiver printers of a cancellation command and stores the specified IP addresses of the distribution destination printers into the memory 302 (step S508). In response to the user' click of the 'Print Cancel' button BT21 provided for a certain distribution destination printer, on the other hand, the print job cancellation module 301a stores the IP address of the certain distribution destination printer into the memory 302.

The print job cancellation module 301a subsequently reads the IP addresses of the specified receiver printers of the cancellation command from the memory 302. As mentioned above, the IP addresses and the job IDs sent from the printer PRT1 have been stored in the memory 302. The print job cancellation module 301a uses the read IP addresses of the specified receiver printers as the key and reads the corresponding job IDs from the memory 302. The print job cancellation module 301a then sends a cancellation command with specification of the job IDs to the specified receiver printers with the read IP addresses (step S510).

In the illustrated example, the IP addresses 'IP1' through 'IP3' and the job IDs '04-1' through '04-3' received from the printer PRT1 have been stored in the memory 302. In response to the user's click of the 'All Print Cancel' button BT22 to select all the IP addresses 'IP1' through 'IP3', the print job cancellation module 301a sends a cancellation command with specification of the job IDs '04-1' through '04-3' to the receiver printers PRT1 through PRT3.

In each of the distribution destination printers, the printer controller receives the cancellation command from the client CL (step S702) and cancels the divisional print job having the specified job ID (step S704).

When the object print job has not been distributed, the client CL receives the IP address 'IP1' of the printer PRT1 and the job ID '04' of the object print job from the printer PRT1 in response to the transmission request, as mentioned above. In this case, the IP address shown on the distributed printing details display window W13 is only the IP address 'IP1' of the printer PRT1. In response to the user's click of the 'Print Cancel' button BT21 provided for the IP address 'IP1' or in response to the user's click of the 'All Print Cancel' button BT22, a cancellation command with specification of the original job ID '04' is sent from the client CL to the printer PRT1. The cancellation processing module 224 of the printer PRT1 deletes the print job with the job ID '04' stored in the print job storage module 230b.

The print job cancellation process accordingly cancels out the object print job with the specified job ID (for example, the job ID '04') in the respective distribution destination printers after the distribution of the print job or in the printer PRT1 before the distribution of the print job.

### D2. Effects of Embodiment

As described above, when a print job received from the client CL is distributed to distribution destination printers, the printer PRT1 creates and stores a distribution destination list, which includes the IP addresses of the distribution destination printers and job IDs assigned by the printer PRT1 to divisional print jobs distributed to the respective distribution destination printers. The job IDs of divisional print jobs assigned by the printer PRT1 are correlated to the job ID of an original print job assigned by the client CL. When the client CL specifies the job ID of an object print job and sends a transmission request for the IP addresses of the distribution destination printers and the job IDs assigned to the divisional print jobs distributed to the respective distribution destination printers, the printer PRT1 refers to this distribution destination list and sends back the IP addresses of the distribution destination printers and the job IDs assigned to the divisional print jobs to the client CL.

Even when the client CL is not informed of specification of the distribution destination printers with regard to an object print job as the cancellation target, the client CL receives the IP addresses of the distribution destination printers and the job IDs of the divisional print jobs distributed to the respective distribution destination printers from the printer PRT1. The client CL then sends a cancellation command to each of the distribution destination printers to cancel out the divisional print job distributed to the distribution destination printer.

After reception of the IP addresses of the distribution destination printers and the job IDs of the divisional print jobs distributed to the respective distribution destination printers from the printer PRT1, the client CL generates and opens the distributed printing details display window W13. The distributed printing details display window W13 includes the IP addresses of the distribution destination printers received from the printer PRT1, the 'Print Cancel' buttons BT21 provided for the respective distribution destination printers, and the 'All Print Cancel' button BT22. Such display allows the user to readily identify distribution destination printers receiving divisions of a print job and to give an instruction for sending a cancellation command to part or all of the identified distribution destination printers, even when the user is not informed of specification of the distribution destination printers with regard to the print job.

### E. Modifications

The embodiments and the examples discussed above are to be considered in all aspects as illustrative and not restrictive. There may be many modifications, changes, and alterations without departing from the scope or spirit of the main characteristics of the present invention. Some examples of possible modification are given below.

### E1. Modified Example 1

In the distributed printing systems of the first embodiment and the second embodiment described above, the IP addresses of the distribution destination printers, the job index numbers allocated to the divisional print jobs by the respective distribution destination printers, and the numbers of print copies completed by the respective distribution destination printers are set as the MIB values in the distributed printing MIB and are stored in the memory 30 of the printer PRT1. Such setting in the distributed printing MIB is, however, not essential but may be modified in any adequate manner. For example, the printer PRT1 may create a list of required information equivalent to these MIB values and store the list separately from the distributed printing MIB into the memory 30.

### E2. Modified Example 2

In the distributed printing system of the first embodiment, the printer PRT1 starts the print job progress status display process when the client CL sends the job information acquisition request to the printer PRT1. This timing is, however, not essential, but the printer PRT1 may start the print job progress status display process in response to distribution of a print job to distribution destination printers.

On activation of an application program to start this modified print job progress status display process, at the timing of distribution of a print job to distribution destination printers by the distribution processing module 22 (see Fig. 2), the printer PRT1 sends the Get-Next-Request command to the distribution destination printers (step S306) and receives the MIB values sent back as the Get-Response commands from the respective distribution destination printers (step S308). The distributed print job management module 24 then updates the settings of the distributed printing MIB and sends the job information to the client CL (step S310). Since the printer PRT1 has not received specification of a target job ID from the client CL, the printer PRT1 sends job information with regard to all print jobs to the client CL. The processing of steps S306 to S310 by the printer PRT1 and the processing of steps S402 and S404 by each distribution destination printer are executed repeatedly.

The client CL stores the job information received from the printer PRT1 (step S204), extracts information on an object print job from the received job information with its job ID stored in the sent job list 102a as the retrieval key, and generates and opens either the distributed printing list display window W1 or the distributed printing details display window W2. The client CL repeatedly receives the job information from the printer PRT1 and thus executes this series of processing at each time of reception of the job information.

Like the first embodiment described above, the client CL can accordingly obtain the job information even when the client CL is not informed of specification of the distribution destination printers with regard to a sent print job. The divisional print jobs distributed to the respective distribution destination printers are successively processed to increase the numbers of print copies completed by the respective distribution destination printers. The repeated processing flow of the modified print job progress status display process successively updates the progress bars PB1 through PB3, the print copy number display boxes D1 through D3, the overall progress bar PBA, and the total print copy number display box DA in the distributed printing details display window W2 shown in Fig. 7.

### E3. Modified Example 3

In the distributed printing systems of the first and the second embodiments described above, the distributed printing details display window W2 shown in Fig. 7 identifies the respective distribution destination printers by their IP addresses. The IP address is however, not restrictive but may be replaced by another adequate piece of identification information, for example, a printer name or an MAC (Media Access Control) address.

### E4. Modified Example 4

In the distributed printing systems of the third and the fourth embodiments described above, when a print job has been distributed to distribution destination printers, the cancellation command is sent to the respective distribution destination printers receiving distributed divisional print jobs. In one possible modification, the cancellation command may be sent to the printer PRT1 having the distributed printing control functions, as well as to the relevant distribution destination printers. In this case, the cancellation command is sent first to the printer PRT1 and subsequently to the relevant distribution destination printers.

The print job cancellation process may be activated during distribution of a print job to distribution destination printers, that is, in the course of transmission of divisional print job data from the printer PRT1 to the respective distribution destination printers. On this occasion, in response to a cancellation command, each distribution destination printer deletes part of the divisional print job data that has been received so far from the printer PRT1 and stored in its print job storage area. The residual part of the divisional print job data received from the printer PRT1 after the deletion, however, remains in the print job storage area.

In the above modified arrangement of sending the cancellation command first to the printer PRT1 and then to the distribution destination printers, the printer PRT1 deletes the residual parts of the divisional print job data that have not yet been sent to the respective distribution destination printers. Each of the distribution destination printers then deletes the part of the divisional print job data that has been received so far from the printer PRT1. The printer PRT1 accordingly does not send the residual parts of the divisional print job data to the respective distribution destination printers after deletion of the sent parts of the divisional print job data in the respective distribution destination printers. This arrangement effectively prevents any parts of divisional print job data from remaining in the print job storage areas of the respective distribution destination printers.

### E5. Modified Example 5

In the distributed printing systems of the third and the fourth embodiments described above, the cancellation processing module 224 is designed to send the cancellation command to all the distribution destination printers identified in the distribution destination list. In one possible modification, the cancellation processing module 224 may be designed to make an inquiry about the current progress status of each distributed divisional print job to all the distribution destination printers identified in the distribution destination list. The cancellation processing module 224 then refers to the responses to this inquiry and sends the cancellation command only to the distribution destination printers that have not yet completed the distributed divisional print jobs. The cancellation processing module 224 of this modified arrangement is equivalent to the transmission request module of the invention.

The cancellation processing module 224 of this modified arrangement does not unnecessary send the cancellation command to the distribution destination printers that have already completed the divisional print jobs distributed to the distribution destination printers. This arrangement desirably reduces the unnecessary data flow on the local area network LAN1.

### E6. Modified Example 6

In the distributed printing systems of the third and the fourth embodiments described above, the cancellation command is sent to each distribution destination printer to cancel out a divisional print job distributed to the distribution destination printer. The technique of the invention is, however, not limited to the cancellation command and is also applicable to another control command sent instead of the cancellation command.

For example, the technique of the invention is applicable to a print job rejection command and a print job reacceptance command. The print job rejection command is sent to each distribution destination printer currently processing one divisional print job, in order to prohibit reception of any other divisional print job from the client or the printer having the distributed printing control functions. The print job reacceptance command is sent to each distribution destination printer to change the status from prohibition to acceptance for reception of another divisional print job from the client or the printer having the distributed printing control functions.

### E7. Modified Example 7

In the distributed printing systems of the third and the fourth embodiments described above, the distribution destination list includes the IP addresses of the distribution destination printers as identification information. The IP address is, however, not restrictive but may be replaced with another adequate piece of information, for example, a printer name or an MAC (Media Access Control) address. The distributed printing details display window W13 generated and opened in the distributed printing system of the fourth embodiment may also include the printer name or another adequate piece of information identifying each distribution destination printer, in place of the IP address.

### E8. Modified Example 8

In the distributed printing systems of the third and the fourth embodiments described above, the cancellation command is sent with specification of the job ID of an object print job as a cancellation target. Each distribution destination printer may be designed to have a print job storage area that is capable of storing only one print job at once and receiving a next print job only after completion of a current print job. In this case, the cancellation command may be sent without specification of the job ID. This is because the object print job as the cancellation target is determined unequivocally in the printer of this design without specification of the job ID. The distribution destination list then includes only the IP addresses of the distribution destination printers.

### E9. Modified Example 9

In the distributed printing systems of the third and the fourth embodiments described above, the client CL and the printer PRT1 send the cancellation command via the respective TCP/IP interpretation modules. This structure is, however, not restrictive in any sense. For example, a command defined by the SNMP (Simple Network Management Protocol) may be used as a cancellation command. The SNMP protocol adopts the UDP (User Datagram Protocol) in the transport layer. In this case, the client CL and the printer PRT1 are designed to have UDP/IP interpretation modules for interpretation of the UDP protocol and to send the cancellation command via the respective UDP/IP interpretation modules.

On the occasion of using a command defined by the SNMP protocol as the cancellation command, the receiving status of a cancellation instruction for each print job is set in advance as a management attribute (object) in an MIB (Management Information Base) storing, for example, the working statuses of the respective printers and the failure and malfunction information. The client or the printer having the distributed printing control functions specifies this management attribute of an object print job and sends a Set Request command as the cancellation command to the relevant receiver printer. In response to this Set Request command, the receiver printer sets a value representing 'reception of the cancellation instruction' in the management attribute and cancels out the object print job.

### E10. Modified Example 10

In the distributed printing systems of the first through the fourth embodiments described above, the distributed printing control device is the custom network board CNB built in the printer PRT1. The technique of the invention is, however, not restricted to this structure. The distributed printing control device may be provided separately from the printer PRT1 and connected with the printer PRT1 either by wired connection like USB connection, IEEE1394 connection, parallel connection, or serial connection or by wireless connection like Bluetooth connection, wireless LAN connection, or infrared connection. The distributed printing device may be a server that is provided separately from the printer PRT1 and is connected to the local area network LAN1.

## Claims

1. A distributed printing system including a client, multiple printing devices, and a distributed printing control device that are interconnected via a network, where the distributed printing control device has a function of distributing a print job received via the network into plural distribution destination printing devices selected as distribution destinations among the multiple printing devices,
the distributed printing control device specifying the plural distribution destination printing devices for the received print job, storing identification information of the specified plural distribution destination printing devices, and distributing divisions of the received print job as divisional print jobs to the specified distribution destination printing devices,
the distributed printing control device, in response to an instruction given by the client, sending a transmission request for print job-related information on processing of the distributed divisional print jobs to the plural distribution destination printing devices identified by the stored identification information, receiving the print job-related information from the identified plural distribution destination printing devices, correlating the received print job-related information to the identification information of the plural distribution destination printing devices as senders of the print job-related information, and sending back the print job-related information correlated to the identification information to the client,
the client receiving the print job-related information correlated to the identification information from the distributed printing control device and displaying information identifying each of the plural distribution destination printing devices and information representing a progress status of each of the divisional print jobs distributed to the plural distribution destination printing devices, based on the received print job-related information and the identification information.

2. The distributed printing system in accordance with claim 1, wherein the print job-related information includes at least one of status information representing a working status of each of the plural distribution destination printing devices, required copy number information included in each distributed divisional print job, and complete copy number information representing a number of print copies completed by each of the plural distribution destination printing devices as a processing result of the distributed divisional print job.

3. A client connected with a distributed printing control device via a network, where the distributed printing control device has functions of specifying plural distribution destination printing devices as distribution destinations for a print job, distributing divisional print jobs as divisions of the print job to the specified plural distribution destination printing devices, and acquiring print job-related information on processing of the divisional print jobs from the respective distribution destination printing devices,
the client having a receiver module, a control module, and a display module,
the receiver module receiving the print job-related information, which is correlated to identification information of the plural distribution destination printing devices, from the distributed printing control device, and
the control module controlling the display module to display information identifying each of the plural distribution destination printing devices and information representing a progress status of each of the divisional print jobs distributed to the plural distribution destination printing devices, based on the identification information and the print job-related information received by the receiver module.

4. The client in accordance with claim 3, wherein the print job-related information includes at least one of status information representing a working status of each of the plural distribution destination printing devices, required copy number information included in each distributed divisional print job, and complete copy number information representing a number of print copies completed by each of the plural distribution destination printing devices as a processing result of the distributed divisional print job.

5. The client in accordance with claim 3, wherein the print job-related information includes at least either of required copy number information included in each distributed divisional print job, and complete copy number information representing a number of print copies completed by each of the plural distribution destination printing devices as a processing result of the distributed divisional print job, and
the control module controls the display module to display total required copy number information representing a sum of required numbers of copies defined by the required copy number information and total complete copy number information representing a sum of the numbers of completed print copies, based on the print job-related information as well as the information identifying each of the plural distribution destination printing devices and the information representing the progress status.

6. A distributed printing control device having a function of distributing a print job received via a network into plural distribution destination printing devices selected as distribution destinations among multiple printing devices connected to the network,
the distributed printing control device comprising:
a specification module that specifies the plural distribution destination printing devices for the received print job;
a storage module that stores identification information of the plural distribution destination printing devices specified by the specification module;
a distribution module that reads the identification information from the storage module and distributes divisions of the received print job as divisional print jobs to the plural distribution destination printing devices identified by the read identification information;
a request module that sends a transmission request for print job-related information on processing of the distributed divisional print jobs to the plural distribution destination printing devices; and
a control module,
in response to an externally given instruction, the request module reading the identification information from the storage module and sending the transmission request for the print job-related information to the plural distribution destination printing devices identified by the read identification information,
the control module receiving the print-job related information from the plural distribution destination printing devices, correlating the received print job-related information to the identification information of the plural distribution destination printing devices as senders of the print job-related information, and sending back the print job-related information correlated to the identification information to a sender of the externally given instruction.

7. A printing device that includes the distributed printing control device in accordance with claim 6.

8. A distributed printing system including a client, multiple printing devices, and a distributed printing control device that are interconnected via a network, where the distributed printing control device has a function of distributing a print job received via the network into plural distribution destination printing devices selected as distribution destinations among the multiple printing devices,
the distributed printing control device specifying the plural distribution destination printing devices for the received print job, storing identification information of the specified plural distribution destination printing devices, and distributing divisions of the received print job as divisional print jobs to the specified distribution destination printing devices,
in response to a transmission request for the identification information from the client, the distributed printing control device sending back the stored identification information to the client,
the client receiving the identification information from the distributed printing control device and sending a transmission request for print job-related information on processing of the distributed divisional print jobs to the distribution destination printing devices identified by the received identification information,
the client receiving the print job-related information from the distribution destination printing devices and displaying information identifying each of the plural distribution destination printing devices and information representing a progress status of each of the divisional print jobs distributed to the plural distribution destination printing devices, based on the received print job-related information.

9. The distributed printing system in accordance with claim 8, wherein the print job-related information includes at least one of status information representing a working status of each of the plural distribution destination printing devices, required copy number information included in each distributed divisional print job, and complete copy number information representing a number of print copies completed by each of the plural distribution destination printing devices as a processing result of the distributed divisional print job.

10. A client connected with a distributed printing control device via a network, where the distributed printing control device has functions of specifying plural distribution destination printing devices as distribution destinations for a print job, storing identification information of the specified distribution destination printing devices, and distributing divisional print jobs as divisions of the print job to the specified plural distribution destination printing devices,
the client comprising:
a control module;
a display module;
a first request module that sends a transmission request for the identification information to the distributed printing control device;
a second request module that, upon reception of the identification information from the distributed printing control device as a response to the transmission request sent by the first request module, sends a transmission request for print job-related information on processing of the distributed divisional print jobs to the distribution destination printing devices identified by the received identification information; and
a receiver module that receives the print job-related information from the distribution destination printing devices as responses to the transmission request sent by the second request module,
the control module controlling the display module to display information identifying each of the plural distribution destination printing devices and information representing a progress status of each of the divisional print jobs distributed to the plural distribution destination printing devices, based on the print job-related information received by the receiver module.

11. The client in accordance with claim 10, wherein the print job-related information includes at least one of status information representing a working status of each of the plural distribution destination printing devices, required copy number information included in each distributed divisional print job, and complete copy number information representing a number of print copies completed by each of the plural distribution destination printing devices as a processing result of the distributed divisional print job.

12. The client in accordance with claim 10, wherein the print job-related information includes at least either of required copy number information included in each distributed divisional print job, and complete copy number information representing a number of print copies completed by each of the plural distribution destination printing devices as a processing result of the distributed divisional print job, and
the control module controls the display module to display total required copy number information representing a sum of required numbers of copies defined by the required copy number information and total complete copy number information representing a sum of the numbers of completed print copies, based on the print job-related information as well as the information identifying each of the plural distribution destination printing devices and the information representing the progress status.

13. A client equipped with a user interface that is activated in the case of distribution of a certain print job as divisional print jobs to plural printing devices connected to a network to check a progress status of each of the divisional print jobs distributed to the plural printing devices,
the user interface displaying a list of identification information identifying each of the plural printing devices and progress status information representing the progress status of each of the divisional print jobs distributed to the plural printing devices in a display window.

14. The client in accordance with claim 13, wherein the user interface displays total required copy number information representing a sum of required numbers of print copies included in the respective distributed divisional print jobs and total complete copy number information representing a sum of numbers of completed print copies as processing results of the distributed divisional print jobs, in addition to the list of identification information representing each of the plural printing devices and the progress status information representing the progress status of each of the divisional print jobs, in the display window.

15. The client in accordance with either one of claims 13 and 14, wherein the progress status information includes at least one of working status information representing a working status of each of the plural printing devices, required copy number information included in each distributed divisional print job, and complete copy number information representing a number of print copies completed by each of the plural printing devices as a processing result of the distributed divisional print job.

16. A distributed printing control device having a function of distributing a print job received via a network into plural distribution destination printing devices selected as distribution destinations among multiple printing devices connected to the network,
the distributed printing control device comprising:
a memory module that stores the received print job;
a specification module that specifies the plural distribution destination printing devices for the received print job;
a storage module that stores identification information of the plural distribution destination printing devices specified by the specification module;
a distribution module that reads the identification information from the storage module and distributes divisions of the print job stored in the memory module as divisional print jobs to the plural distribution destination printing devices identified by the read identification information; and
a command transmission module that sends a control command for execution of a predetermined process to the distribution destination printing devices,
in response to an externally given instruction for sending the control command to the distribution destination printing devices, the command transmission module reading the identification information from the storage module and sending the control command to at least one of the distribution destination printing devices identified by the read identification information.

17. A distributed printing control device having a function of distributing a print job received via a network into plural distribution destination printing devices selected as distribution destinations among multiple printing devices connected to the network,
the distributed printing control device comprising:
a memory module that stores the received print job ;
a specification module that specifies the plural distribution destination printing devices;
a storage module that stores identification information of the plural distribution destination printing devices specified by the specification module;
a distribution module that reads the identification information from the storage module and distributes divisions of the print job stored in the memory module as divisional print jobs to the plural distribution destination printing devices identified by the read identification information; and
a command transmission module that sends a cancellation command to the distribution destination printing devices to cancel the divisional print jobs distributed to the distribution destination printing devices,
in response to an externally given instruction for sending the cancellation command to the distribution destination printing devices, the command transmission module reading the identification information from the storage module and sending the cancellation command to at least one of the distribution destination printing devices identified by the read identification information.

18. The distributed printing control device in accordance with claim 17, the distributed printing control device further comprising:
a control module that cancels the print job stored in the memory module,
when the instruction for sending the cancellation command to the distribution destination printing devices is externally given in the course of distribution of the print job as the divisional print jobs to the distribution destination printing devices by the distribution module and reception of the distributed divisional print jobs by the respective distribution destination printing devices, the control module canceling the print job stored in the memory module,
in response to cancellation of the print job by the control module, the command transmission module reading the identification information from the storage module and sending the cancellation command to the distribution destination printing devices identified by the read identification information.

19. The distributed printing control device in accordance with claim 17, the distributed printing control device further comprising:
a transmission request module that sends a transmission request for progress status information regarding a progress status of each of the divisional print jobs distributed to the distribution destination printing devices,
in response to the externally given instruction for sending the cancellation command, the transmission request module reading the identification information from the storage module and sending the transmission request for the progress status information to the distribution destination printing devices identified by the read identification information,
the command transmission module sending the cancellation command to only a distribution destination printing device that has not yet completed the distributed divisional print job among the identified distribution destination printing devices, based on the progress status information received from the distribution destination printing devices as responses to the transmission request sent by the transmission request module.

20. A printing device that includes the distributed printing control device in accordance with any one of claims 16 through 19.

21. A distributed printing system including a client, multiple printing devices, and a distributed printing control device that are interconnected via a network, where the distributed printing control device has a function of distributing a print job received via the network into plural distribution destination printing devices selected as distribution destinations among the multiple printing devices,
the distributed printing control device specifying the plural distribution destination printing devices for the received print job, storing identification information of the specified plural distribution destination printing devices, and distributing divisions of the received print job as divisional print jobs to the specified distribution destination printing devices,
in response to a transmission request for the identification information from the client, the distributed printing control device sending the stored identification information to the client,
the client receiving the identification information from the distributed printing control device and sending a cancellation command to at least one of the distribution destination printing devices identified by the received identification information to cancel a divisional print job distributed to the distribution destination printing device.

22. A client connected with a distributed printing control device via a network, where the distributed printing control device has functions of storing a print job in a memory module, specifying plural distribution destination printing devices as distribution destinations for the print job and distributing divisional print jobs as divisions of the print job to the specified plural distribution destination printing devices,
the client comprising:
an input module that inputs an instruction for cancellation of the print job ;
an identification information transmission request module that, in response to input of the instruction for cancellation of the print job via the input module, sends a transmission request for identification information of the specified distribution destination printing devices to the distributed printing control device;
a user interface module that receives the identification information from the distributed printing control device as a response to the transmission request by the identification information transmission request module and provides a user interface based on the received identification information, where the user interface is activated to select at least one distribution destination printing device as a cancellation target of the divisional print job distributed to the at least one distribution destination printing device; and
a command transmission module that sends a first cancellation command to the at least one distribution destination printing device selected by means of the user interface to cancel the divisional print job distributed to the at least one distribution destination printing device.

23. The client in accordance with claim 22, wherein upon selection of the at least one distribution destination printing device by means of the user interface, the command transmission module first sends a second cancellation command to the distributed printing control device to cancel the print job stored in the memory module and subsequently sends the first cancellation command to the at least one distribution destination printing device.

24. The client in accordance with claim 22, the client further comprising:
a request module that sends a transmission request for progress status information regarding a progress status of the distributed divisional print job to the at least one distribution destination printing device selected by means of the user interface,
the command transmission module sending the first cancellation command to only a distribution destination printing device that has not yet completed the distributed divisional print job among the at least one distribution destination printing device, based on the progress status information received from the at least one distribution destination printing devices as responses to the transmission request sent by the status transmission request module.

25. A client equipped with a user interface that is activated in the case of distribution of a certain print job as divisional print jobs to plural printing devices connected to a network to specify at least one printing device and cancel the divisional print job distributed to the specified printing device,
the user interface displaying a list of identification information identifying each of the plural printing devices and plural first instruction elements provided individually corresponding to the plural printing devices to give instructions for cancellation of the divisional print jobs distributed to the corresponding printing devices in a display window.

26. The client in accordance with claim 25, wherein the user interface displays a second instruction element to give an instruction for overall cancellation of all the divisional print jobs distributed to the plural printing devices, in addition to the list of identification information representing each of the printing devices and the plural first instruction elements, in the display window.

27. A distributed printing control device having functions of specifying plural distribution destination printing devices selected as divisional destinations of a print job received via a network among multiple printing devices connected to the network and distributing divisional print jobs as divisions of the print job to the specified plural distribution destination printing devices,
the distributed printing control device comprising:
a storage module that stores identification information of the specified plural distribution destination printing devices; and
a transmission module that sends the identification information to a client connected to the network,
in response to a request for transmission of the identification information from the client to the distributed printing control device, the transmission module reading the identification information from the storage module and sending the read identification information to the client.

28. A printing device that includes the distributed printing control device in accordance with claim 27.

29. In a distributed printing control device that specifies distribution destination printing devices as distribution destinations of a print job sent via a network and distributes divisions of the print job as divisional print jobs to the specified distribution destination printing devices, a print job progress status display method of causing a client to display a progress status of each of the divisional print jobs distributed to the distribution destination printing devices,
the print job progress status display method comprising:
(a) causing the distributed printing control device to store identification information of the specified distribution destination printing devices into a storage module of the distributed printing control device;
(b) causing the distributed printing control device to read the identification information from the storage module and to send a transmission request for print job-related information on processing of the distributed divisional print jobs to the distribution destination printing devices identified by the read identification information;
(c) causing the distributed printing control device to receive the print job-related information from the distribution destination printing devices, to correlate the received print job-related information to the identification information of the distribution destination printing devices as senders of the print job-related information, and to send the print job-related information correlated to the identification information to the client; and
(d) causing the client to receive the identification information and the print job-related information from the distributed printing control device and to display information identifying each of the distribution destination printing devices and information representing the progress status of each of the divisional print jobs distributed to the distribution destination printing devices, based on the received print job-related information and the identification information.

30. In a distributed printing control device that specifies distribution destination printing devices as distribution destinations of a print job sent via a network and distributes divisions of the print job as divisional print jobs to the specified distribution destination printing devices, a print job progress status display method of causing a client to display a progress status of each of the divisional print jobs distributed to the distribution destination printing devices,
the print job progress status display method comprising:
(a) causing the distributed printing control device to store identification information of the specified distribution destination printing devices into a storage module of the distributed printing control device;
(b) causing the client to send a transmission request for the identification information to the distributed printing control device;
(c) causing the client to receive the identification information from the distributed printing control device and to send a transmission request for print job-related information on processing of the distributed divisional print jobs to the distribution destination printing devices identified by the received identification information; and
(d) causing the client to receive the print job-related information from the distribution destination printing devices and to display information identifying each of the distribution destination printing devices and information representing the progress status of each of the divisional print jobs distributed to the distribution destination printing devices, based on the received print job-related information.

31. In a distributed printing control device that specifies distribution destination printing devices as distribution destinations of a print job sent via a network and distributes divisions of the print job as divisional print jobs to the specified distribution destination printing devices, a control command transmission method of sending a control command for execution of a predetermined process to the specified distribution destination printing devices,
the control command transmission method comprising:
(a) causing the distributed printing control device to store identification information of the specified distribution destination printing devices into a storage module of the distributed printing control device;
(b) causing the distributed printing control device to receive a transmission request for the control command to the specified distribution destination printing devices; and
(c) causing the distributed printing control device to read the identification information from the storage module and to send the control command to at least one of the distribution destination printing devices identified by the read identification information.

32. In a distributed printing control device that specifies distribution destination printing devices as distribution destinations of a print job sent via a network and distributes divisions of the print job as divisional print jobs to the specified distribution destination printing devices, a print job cancellation method of canceling the distributed print job,
the print job cancellation method comprising:
(a) causing the distributed printing control device to store identification information of the specified distribution destination printing devices into a storage module of the distributed printing control device ;
(b) causing the distributed printing control device to receive a transmission request for a cancellation command for cancellation of the distributed print job to the specified distribution destination printing devices; and
(c) causing the distributed printing control device to read the identification information from the storage module and to send the cancellation command to at least one of the distribution destination printing devices identified by the read identification information.

33. In a distributed printing control device that specifies distribution destination printing devices as distribution destinations of a print job sent via a network and distributes divisions of the print job as divisional print jobs to the specified distribution destination printing devices, a print job cancellation method of canceling the distributed print job,
the print job cancellation method comprising:
(a) causing the distributed printing control device to store identification information of the specified distribution destination printing devices into a storage module of the distributed printing control device;
(b) causing the distributed printing control device to receive a transmission request for the identification information from a client;
(c) causing the distributed printing control device to read the identification information from the storage module and to send the read identification information to the client; and
(d) causing the client to send a cancellation command for cancellation of the distributed print job to at least one of the distribution destination printing devices identified by the received identification information.

34. In a distributed printing control device that specifies distribution destination printing devices as distribution destinations of a print job sent via a network and distributes divisions of the print job as divisional print jobs to the specified distribution destination printing devices, a computer program product used to display a progress status of each of the divisional print jobs distributed to the distribution destination printing devices on a display module of a computer,
the computer program product comprising:
a first program code of causing the computer to receive print job-related information from the distributed printing control device, where the print job-related information is correlated to identification information of the specified distribution destination printing devices and regards processing of the distributed divisional print jobs;
a second program code of causing the computer to display information identifying each of the distribution destination printing devices and information representing the progress status of each of the divisional print jobs distributed to the distribution destination printing devices on the display module, based on the received print job-related information and the identification information; and
a computer readable medium that stores the first program code and the second program code.

35. In a distributed printing control device that specifies distribution destination printing devices as distribution destinations of a print job sent via a network, stores identification information of the specified distribution destination printing devices, and distributes divisions of the print job as divisional print jobs to the specified distribution destination printing devices, a computer program product used to display a progress status of each of the divisional print jobs distributed to the distribution destination printing devices on a display module of a computer,
the computer program product comprising:
a first program code of causing the computer to send a transmission request for the identification information to the distributed printing control device;
a second program code of causing the computer to receive the identification information from the distributed printing control device and to send a transmission request for print job-related information on processing of the distributed divisional print jobs to the distribution destination printing devices identified by the received identification information;
a third program code of causing the computer to receive the print job-related information from the distribution destination printing devices;
a fourth program code of causing the computer to display information identifying each of the distribution destination printing devices and information representing the progress status of each of the divisional print jobs distributed to the distribution destination printing devices on the display module, based on the received print job-related information; and
a computer readable medium that stores the first through the fourth program codes.

36. In a computer that specifies distribution destination printing devices as distribution destinations of a print job sent via a network and distributes divisions of the print job as divisional print jobs to the specified distribution destination printing devices, a computer program product used to send print job-related information in response to an externally given instruction to a sender of the externally given instruction, where the print job-related information regards processing of the divisional print jobs distributed to the distribution destination printing devices,
the computer program product comprising:
a first program code of causing the computer to store identification information of the specified distribution destination printing devices into a storage module of the computer;
a second program code of causing the computer to read the identification information from the storage module in response to the externally given instruction and to send a transmission request for the print job-related information to the distribution destination printing devices identified by the read identification information;
a third program code of causing the computer to receive the print job-related information from the distribution destination printing devices, to correlate the received print job-related information to the identification information of the distribution destination printing devices as senders of the print job-related information, and to send the print job-related information correlated to the identification information to the sender of the externally given instruction; and
a computer readable medium that stores the first through the third program codes.

37. In a computer that specifies distribution destination printing devices as distribution destinations of a print job sent via a network and distributes divisions of the print job as divisional print jobs to the specified distribution destination printing devices, a computer program product used to send a control command for execution of a predetermined process to the specified distribution destination printing devices,
the computer program product comprising:
a first program code of causing the computer to store identification information of the specified distribution destination printing devices into a storage module of the computer;
a second program code of causing the computer to receive a transmission request for the control command to the specified distribution destination printing devices, to read the identification information from the storage module, and to send the control command to at least one of the distribution destination printing devices identified by the read identification information; and
a computer readable medium that stores the first program code and the second program code.

38. In a computer that specifies distribution destination printing devices as distribution destinations of a print job sent via a network and distributes divisions of the print job as divisional print jobs to the specified distribution destination printing devices, a computer program product used to send a cancellation command for cancellation of the distributed print job to the specified distribution destination printing devices,
the computer program product comprising:
a first program code of causing the computer to store identification information of the specified distribution destination printing devices into a storage module of the computer;
a second program code of causing the computer to receive a transmission request for the cancellation command to the specified distribution destination printing devices, to read the identification information from the storage module, and to send the cancellation command to at least one of the distribution destination printing devices identified by the read identification information; and
a computer readable medium that stores the first program code and the second program code.

39. In a distributed printing control device that specifies distribution destination printing devices as distribution destinations of a print job sent via a network and distributes divisions of the print job as divisional print jobs to the specified distribution destination printing devices, a computer program product executed by a computer to cancel the divisional print jobs distributed to the specified distribution destination printing devices,
the computer program product comprising:
a first program code of causing the computer to receive an externally given instruction for cancellation of the distributed print job and to send a transmission request for identification information of the specified distribution destination printing devices to the distributed printing control device;
a second program code of causing the computer to receive the identification information from the distributed printing control device as a response to the transmission request and to provide a user interface based on the received identification information, where the user interface is activated to select at least one distribution destination printing device as a cancellation target of the divisional print job distributed to the at least one distribution destination printing device;
a third program code of causing the computer to send a cancellation command to the at least one distribution destination printing device selected by means of the user interface, in order to cancel the divisional print job distributed to the at least one distribution destination printing device; and
a computer readable medium that stores the first through the third program codes.

40. In a computer that specifies distribution destination printing devices as distribution destinations of a print job sent via a network and distributes divisions of the print job as divisional print jobs to the specified distribution destination printing devices, a computer program product used to send identification information of the specified distribution destination printing devices to a client connected with the computer via the network,
the computer program product comprising:
a first program code of causing the computer to store identification information of the specified distribution destination printing devices into a storage module of the computer;
a second program code of causing the computer to receive a transmission request for the identification information from the client, to read the identification information from the storage module, and to send the read identification information to the client; and
a computer readable medium that stores the first program code and the second program code.
